(19) **Europäisches Patentamt / European Patent Office / Office européen des brevets**

(11) **EP 2 081 326 B1**

(12) **EUROPEAN PATENT SPECIFICATION**

(45) Date of publication and mention
of the grant of the patent:
**23.03.2011 Bulletin 2011/12**

(51) Int Cl.:
***H04L 12/26*** *(2006.01)*

(21) Application number: **09150720.2**

(22) Date of filing: **16.01.2009**

(54) **Statistical processing apparatus capable of reducing storage space for storing statistical occurence frequency data and a processing method therefor**

Zur Reduzierung des Speicherplatzes beim Speichern von Daten der statistischen Häufigkeitsfrequenz fähige Vorrichtung zur statistischen Verarbeitung und Verarbeitungsverfahren dafür

Appareil de traitement statistique capable de réduire l'espace de stockage pour stocker les données de fréquence d'occurrence statistique et son procédé de traitement

(84) Designated Contracting States:
**DE FR GB**

(30) Priority: **04.03.2008 JP 2008053195**
**16.01.2008 JP 2008007359**

(43) Date of publication of application:
**22.07.2009 Bulletin 2009/30**

(73) Proprietor: **Oki Electric Industry Co., Ltd.**
**Minato-ku**
**Tokyo**
**105-8460 (JP)**

(72) Inventors:
• **Hamaguchi, Yoshitaka**
**c/o Oki Electric Industry Co., Ltd.**
**Tokyo 105-8460 (JP)**
• **Ikada, Satoshi**
**c/o Oki Electric Industry Co., Ltd.**
**Tokyo 105-8460 (JP)**

(74) Representative: **Betten & Resch**
**Patentanwälte**
**Theatinerstrasse 8**
**80333 München (DE)**

(56) References cited:
**US-A1- 2004 028 003     US-A1- 2005 060 598**
**US-A1- 2005 227 625**

EP 2 081 326 B1

**Description**

BACKGROUND OF THE INVENTION

Field of the Invention

The present invention relates to a statistical processing apparatus capable of reducing storage space for storing data of statistical occurrence frequency, and more specifically to a statistical processing apparatus for use in, for example, a network management system for counting the occurrence frequency of each value of data to be processed included in a stream of data supplied over a telecommunications network. The present invention also relates to a statistical processing method for use in, for example, a processing method for counting the occurrence frequency of each value in a stream of data supplied over a telecommunications network to obtain statistical frequency information from a count of occurrence frequency.

Description of the Background Art

An apparatus for extracting values appearing at a frequency equal to or higher than a certain value from large sequential streaming time-serial data is required in various situations. Such an apparatus, for example, treats IP (Internet Protocol) addresses having errors such as packet loss detected on traffic as a stream of data, and counts the number of the detected errors in each IP address to statistically process the errors. The apparatus is applied to, for example, a monitoring system for using a resultant count to observe traffic to determine an IP address or a path having caused the errors at a rate equal to or higher than a certain value.

When applied to such a case, in order to count errors in the simplest way, such an apparatus can include counters which are provided for each IP address and incremented in response to each error caused, and include memories for storing a resultant count. The apparatus is adapted to, each time having detected an error, increment the counter associated with an IP address on which the error was detected to store the resultant count in the memory.

Well, in general, an IP networK has its IP address space enormous. Therefore, in order to count errors in the simplest way through such an apparatus, the apparatus has to have counters which are provided to be equal in number to at least the terminal devices to be monitored that are connected to an IP network, and the corresponding storage space required for recording the counts. In order to satisfy such a least demand, too many counters and large memory space are required.

In such an apparatus, even when searching for a counter related to the frequency equal to or higher than a desired frequency value, it is also required to scan large memory space in order to extract appropriate data of the results stored in the memory. As a result, the more counters, the longer time is needed for searching. As described above, the provision of the counters for every IP address is generally not suitable for practical use.

Methods for improving these points have been proposed. One of the proposed documents is Gurmeet Singh Manku, et al., "Approximate Frequency Counts over Data Stream", Proceedings of the 28th VLDB Conference, (28th VLDB), pp. 346-357, August 2002. This document discloses a method for appropriately deleting the count for data, i.e. IP address, determined to have an occurrence frequency stochastically lower or falling within a certain error range to whereby count, with small memory space, data appearing at a frequency equal to or higher than a certain value and their frequencies. A count for an IP address As frequency information, and is referred to, as a sketch.

Especially, a method described in Section 4.2 "Lossy Counting Algorithm" of Gurmeet Singh Manku, et al., will be simply described. This method is performed, for example, through the following steps in a network analyzer performing a statistical process by a computer, etc.

In step (1), the network analyzer stores $N$ pieces of data or values acquired in each cycle in a stream of data to be counted in a storage area reserved by a storage, where $N$ is a predetermined natural number. Now, the $N$ pieces of data or values is assumed to be divided by the reciprocal number of an allowable error rate $\varepsilon$ [%] defining an error range of a frequency. This divided unit is defined as a time interval. Therefore, the number of intervals in one cycle is represented by $\varepsilon N$. Each interval is designated with, for example, one integer from one as an interval number in series.

Instep (2), the network analyzer starts a process from first data, or first data of an interval number 1 in series. When determining that the data related to the process have a new value, the storage stores the frequency information including an error estimating value $\Delta$ represented by a value calculated by subtracting one from the interval number of the interval including the value and the data, and a frequency count $f$ set to one. Meanwhile, when determining that the data or value representing an IP address in the process has already been stored, the storage stores a value calculated by adding one to a frequency count $f$ for the IP address.

Instep (3), each time reaching aboundary of the interval, i.e., final data in the interval, the network analyzer determines whether to delete the frequency information representing the data or value having a low frequency count $f$, based on the following conditions in the storage.

(3.1) If $f + \Delta \leq$ (current interval number), then data including this frequency count $f$ and this error estimating value $\Delta \leq$ (current interval number), data including this frequency count $f$ and this error estimating value $\Delta$, in other words, the frequency information is deleted in the storage.

(3.2) The data or value such that the condition (3.1), in other words, the inequality is not satisfied is left in the storage.

Once steps (2) and (3) are repeated to the N-th data or value, the network analyzer is mathematically guaranteed to leave all the data or value representing the frequency count equal to or more than a certain number in the storage, and deletes the data or value having a low frequency count $f$ by the condition (3.1) not to leave the data or value. Therefore, since memory space is necessary only for counting the important data having a high frequency count $f$, even smaller memory space is sufficient for processing a larger amount of data stream in order to count the occurrence frequency of the required data.

Well, like traffic observation, in applications where data consecutively and endlessly stream and IP addresses active in communication often change, IP addresses frequently appearing in the observed streams of data generally change so often with time. In such cases, from a viewpoint of knowing temporal change in the frequently-appearing IP addresses as close to real-time as possible, processed results are required to be able to be extracted at time intervals as short as possible. From a similar viewpoint, frequently-appearing data are also required to be able to be extracted consecutively without intermittence in observation.

However, in the prior art disclosed by Gurmeet Singh Manku, et al., since one block of processes is completed by $N$ pieces of data or values processed, the processed result can be basically extracted only each time the $N$ pieces of data or values were processed even in the case where frequently-appearing data or values are desired to be consecutively extracted.

Since the number of data pieces $(1 / \varepsilon)$ in each interval and the number of intervals $(\varepsilon N)$ are defined on the basis of the allowable error rate $\varepsilon$ for $N$ pieces of data or values, it is restrained to shorten the interval by decreasing the $N$ data pieces to be processed as one unit.

If a result from processing in this way is extracted without waiting for a completion of each process on the $N$ pieces of data or values, it is then necessary to shift the starting point of the data or value by positions corresponding to the intended number $w$ of data pieces, and to start the counting process on the respective data or values in parallel from the starting point thus shifted. In this case, the counting process can acquire a extracted result in each process for the w pieces of data. However, since multiple parallel processes require the memory space and data processing capacity used for each process, the enormous resources have to be consumed. This may cause a gap against the purpose of reducing memory space.

Especially, because of the wide possible range of the value of data in a supplied stream of data, it is difficult to keep storing or recording counts for all the values. In addition, for example, time-serial data cannot appropriately be dealt with when data tend to changeably appear with time.

More specifically, it is difficult to consecutively acquire progressive counts without performing respective parallel processes with data having a lower occurrence frequency deleted to reduce the memory space.

US 2005/060598 A1 discloses a network analysis tool. Embodiments of the invention provide a method for determining errors and metrics in a computer network. The method includes positioning an analyzer In communication with the network, capturing a data trace of the network with the analyzer, determining a network device topology from a first processing of the data trace, building user layer protocols using a second processing of the data trace and the determined device topology, determining errors in the network device topology using protocol experts applied to the user layer protocols in conjunction with the determined device topology, and displaying at least one of the device topology and the determined errors to a user.

US 2005/227625 A1 discloses a user interface and time-shifted presentation of data in a system that monitors activity in a shared radio frequency band. An intelligent spectrum management (ISM) system and method that includes sophisticated features to detect, classify, and locate sources of RF activity. The system comprises one or more radio sensor devices positioned at various locations in a region where activity in a shared radio frequency band is occurring. A server is coupled to the radio sensor devices and aggregates the data generated by the sensor devices. Data collected and processed by the server from the sensors may be coupled to a console application that displays the data in desirable user interface format. According to one aspect, the server continuously stores spectrum analysis data pertaining to activity in a frequency band over time and/or protocol analysis data pertaining to analysis of packets transmitted in the frequency band according to a communication protocol. A console application includes a time-shift display mode that permits a user to specify an Instant of time prior to the current time from which to playback spectrum analysis data and/or protocol analysis data generated by one or more radio sensor devices.

## SUMMARY OF THE INVENTION

It is therefore an object of the present invention to provide a statistical processing apparatus capable of reducing memory space for storing data of statistical occurrence frequency while acquiring the statistical occurrence frequency from a count on a stream of data supplied, and a processing method therefor.

The present invention is defined in the independent claims. The dependent claims define embodiments of the invention.

In accordance with the present invention, a statistical processing apparatus sets the number of allowable errors represented by the reciprocal of an allowable error rate to be set for a predetermined number of supplied data sets as the number of intervals for delimiting the data, counts an occurrence frequency for a value of each of data pieces in one interval, deletes frequency information for the occurrence frequency lower than a predetermined occurrence frequency each time acquiring the frequency information based on the counting, and acquires the frequency information for the data through a statistical process. The apparatus includes a storage for storing the occurrence frequencies in entire intervals as all of the intervals, and a first one and a final one of the entire intervals as a set of the occurrence frequencies; and an arithmetic processor for counting the occurrence frequency of the value while deleting the frequency information matching a comparison of the stored frequency information. The arithmetic processor determines whether to estimate the occurrence frequency of the value in the interval next to the first interval for the value of the frequency information stored in the storage after counting the predetermined number of the data sets or after counting the value of the data set in each interval. The arithmetic processor is in response to true determination to store in the storage a value calculated by subtracting the occurrence frequency in the first interval from the estimated occurrence frequency as the occurrence frequency in the data sets of a number, corresponding to the predetermined number minus one, of the intervals shifted by one interval. The arithmetic processor estimates the occurrence frequency in the interval next to the first interval based on the set of occurrence frequencies to store the estimated occurrence frequency in the storage as the occurrence frequency of the first interval in the predetermined number of the next data sets shifted by one interval.

Furthermore, a statistical processing apparatus in accordance with the present invention sets the number of allowable errors represented by the reciprocal of an allowable error rate to be set for a predetermined number of data sets in a stream of data supplied in one cycle period as the number of intervals for delimiting data, counting an occurrence frequency of a value for each data piece in one interval, deletes frequency information for the occurrence frequency lower than a predetermined occurrence frequency each time acquiring the frequency information based on the counting, and acquires the frequency information for the data. The apparatus includes a storage for storing the occurrence frequencies in a first one and a final one of the intervals delimited for the data sets, the occurrence frequency for counting the occurrence of each value of the data, and an error estimating value representing a count starting interval of the occurrence frequency for counting the occurrence of each value of the data as a set of the frequency information related to counting; and an arithmetic processor for searching the storage storing the frequency information of the value in the data having an occurrence rate equal to or higher than a predetermined occurrence rate in the cycle period, processing the frequency information in the storage through addition, delete and modification, setting, after processing the first data set, the data set shifted by one interval as a next cycle each time processing the data for one interval, and performing the addition, delete and modification for the frequency information of the value so as to search for and acquire the frequency information of the value in the data having the occurrence rate equal to or higher than the predetermined occurrence rate for the data set of the next cycle. The arithmetic processor further includes an acquisition processor for acquiring the value of the data included in a stream of data; a counting processor for newly adding the frequency information for the acquired value in response to the absence of the value for the supplied data, and adding the occurrence frequency of the frequency information for the acquired value in response to the presence of the value to update the occurrence frequency; an intra-interval process number determiner for counting the number of processes for the data from the first data in each interval to store the count in the storage, and to determine whether to reach an interval boundary based on the stored number of the processed data in the interval; a process number determiner for counting the number of the processes for the data from the start of the processes to determines whether or not the number of data sets less than the predetermined number has been processed on the basis of the number of the processed data stored in the storage; a count determination processor for deleting the frequency informations having the occurrence frequency lower than the predetermined occurrence frequency in the data for the number of the processed intervals based on the occurrence frequency of the value and the error estimating value in the data set after processing the data acquired in one interval; and frequency arithmetic processor for adjusting the occurrence frequency by the counting processor based on the error estimating value of each value for the data set in the first cycle stored in the storage, associated with the end of process of the counting processor and the count determination processor, determining whether to estimate the occurrence frequency of the value in the interval next to the first interval, storing, in response to the true determination, a value calculated by subtracting the occurrence frequency in the first interval from the estimated occurrence frequency in the storage as the occurrence frequency in the data sets for a number, corresponding to the predetermined number minus onw, of intervals shifted by one interval, and estimating the occurrence frequency in the interval next to the first interval based on one set of the occurrence frequencies to store this estimated occurrence frequency in the storage as the occurrence frequency of the first interval in the next data sets for the predetermined number of intervals shifted by one interval. The arithmetic processor consecutively processes the inputted data treated as data inputted from the first data of the final interval in the next cycle.

Furthermore, a statistical processing method in accordance with the present invention sets the number of allowable errors represented by the reciprocal of an allowable error rate to be set for a predetermined number of supplied data sets as the number of intervals for delimiting the data, counts an occurrence frequency for a value of each data piece in one interval, deletes frequency information for the occurrence frequency lower than a predetermined occurrence frequency each time acquiring the frequency information based on the counting, and acquiring the frequency information for the data through a statistical process. The method includes a first step of determining whether to require to estimate the occurrence frequency in the interval next to the first interval in a divided data set for each value of the frequency information stored in a storage after counting for the data set and after counting the value in each interval, and a second step of storing the occurrence frequency calculated by subtracting the occurrence frequency in the first interval from the acquired occurrence frequency for the data set in the storage as the occurrence frequency through a counting process in the data of a number, corresponding to the predetermined number minus one, of the intervals shifted by one interval based on the occurrence frequency in the first interval, the occurrence frequency in the final interval in the divided data set, and the occurrence frequency in the data sets stored in the storage as the frequency information where a determination in the first step is true, and estimating the occurrence frequency in the next interval to store the estimated occurrence frequency in the storage as the occurrence frequency of the first interval in the next data set shifted by one interval.

In a statistical processing apparatus in accordance with the present invention, a storage stores occurrence frequencies in entire intervals, and a first interval and a final interval as a set of the occurrence frequencies, and an arithmetic processor counts the occurrence frequency of the value while deleting the frequency information matching a comparison of the stored frequency information. The arithmetic processor determines wether to estimate the occurrence frequency of the value in the interval next to the first interval for the value of the frequency information stored in the storage after counting a predetermined number of the data sets or after counting the value of the data set in each interval, stores in the storage, in response to the true determination, a value calculated by subtracting the occurrence frequency in the first interval from the estimated occurrence frequency as the occurrence frequency in the data sets of a number, corresponding to the predetermined number minus one, of the intervals shifted by one interval, and estimates the occurrence frequency in the interval next to the first interval based on the set of the occurrence frequencies to store the estimated occurrence frequency in the storage as the occurrence frequency of the first interval in the predetermined number of the next data sets shifted by one interval. While reducing the memory space and data processing capacity required for the counting and statistical processes, the statistical frequency information can be extracted and acquired at a much shorter time interval than the conventional art that can acquire the occurrence frequency only after the process for the predetermined number of data sets.

Furthermore, in a statistical processing apparatus in accordance with the present invention, a storage stores the occurrence frequencies in a first interval and a final interval of the intervals delimited for the data sets, the occurrence frequency for counting the occurrence of each value of the data, and an error estimating value representing a count starting interval of the occurrence frequency for counting the occurrence of each value of the data as a set of the frequency information related to counting. An arithmetic processor searches the storage storing the frequency information of the value in the data having an occurrence rate equal to or higher than a predetermined occurrence rate in the cycle period, processes the frequency information in the storage through addition, delete, and modification, sets, after processing the first data set, the data set shifted by one interval as a next cycle each time processing the data for one interval, and performs the addition, delete and modification for the frequency information of the value so as to search for and acquire the frequency information of the value in the data having the occurrence rate equal to or higher than the predetermined occurrence rate for the data set of the next cycle. Furthermore, in the arithmetic processor, an acquisition processor acquires the value of the data included in the stream of data. A counting processor newly adds the frequency information for the acquired value in response to the absence of the value for the supplied data, and adds the occurrence frequency of the frequency information for the acquired value in response to the presence of the value to update the occurrence frequency. An infra-interval process number determiner counts the number of processes for the data from the first data in each interval to store the count in the storage, and to determine whether to reach an interval boundary based on the stored number of the processed data in the interval. A process number determiner counts the number of the processes for the data from the start of the processes to determine whether or not the number of data sets less than the predetermined number has been processed on the basis of the number of the processed data stored in the storage. A count determination processor deletes the frequency information having the occurrence frequency lower than the predetermined occurrence frequency in the data for the number of the processed intervals based on the occurrence frequency of the value and the error estimating value in the data set, after processing the data acquired in one interval. A frequency arithmetic processor adjusts the occurrence frequency by the counting processor based on the error estimating value of each value for the data set in the first cycle stored in the storage, associated with the end of process of the counting processor and the count determination processor, determines whether to estimate the occurrence frequency of the value in the interval next to the first interval, stores in the storage, in response to the true determination, a value calculated by subtracting the occurrence frequency in the first interval from the estimated occurrence frequency as the occurrence frequency in the data sets for the number, corresponding to the predetermined number minus one, of intervals shifted by one interval, and estimates the occurrence frequency in the interval next to the first interval based on one set of the occurrence frequencies to store this estimated occurrence frequency in the storage as the occurrence frequency of the first interval in the next data sets for the predetermined number of intervals shifted by one interval. The arithmetic processor consecutively processes the inputted data treated as data inputted from the first data of the final interval in the next cycle. While reducing the memory space and data processing capacity required for the counting and statistical processes, the statistical frequency information can be extracted and acquired at a much shorter time interval than the conventional art that can acquire the occurrence frequency only after the process for the predetermined number of data sets.

Furthermore, in a statistical processing method in accordance with the present invention, a first step determines whether to require to estimate the occurrence frequency in the interval next to the first interval in the divided data set for each value of the frequency information stored in a storage after the count for the data set and after counting the value in each interval, and a second step stores the occurrence frequency calculated by subtracting the occurrence frequency in the first interval from the acquired occurrence frequency for the data set in the storage as the occurrence frequency through a counting process in the data of the number, corresponding to the predetermined number minus one, of the intervals shifted by one interval based on the occurrence frequency in the first, interval, the occurrence frequency in the final interval in the divided data set, and the occurrence frequency in the data sets stored in the storage as the frequency information where a determination in the first step is true, and estimates the occurrence frequency in the next interval to store the estimated occurrence frequency in the storage as the occurrence frequency of the first interval in the next data set shifted by one interval. A count result of the data having alow statistical occurrence frequency can be deleted to thus reduce the memory space for storing count results for the counting.

## BRIEF DESCRIPTION OF THE DRAWINGS

The objects and features of the present invention will become more apparent from consideration of the following detailed description taken in conjunction with the accompanying drawings in which:

FIG. 1 is a schematic block diagram showing a configuration of a network analyzer to which a statistical processing apparatus in accordance with an embodiment of the present invention is applied;

FIGS. 2A - 2D show examples of frequency information stored into a sketch memory shown in FIG. 1;

FIG. 3 is a conceptual diagram on time axis showing data acquisition applied to a statistical process in the network analyzer shown in FIG. 1;

FIGS. 4 and 5 are a main flowchart showing operational steps of the statistical process in the network analyser shown in FIG. 1;

FIG. 6 is a flowchart of a subroutine showing arithmetic steps for an occurrence frequency in the flow shown in FIG. 4;

FIG. 7 is a graph conceptually showing the estimation for the occurrence frequency in the network analyzer shown in FIG. 1;

FIG. 8 is a schematic block diagram showing a configuration of an arithmetic processor included in a network analyzer to which a statistical processing apparatus in accordance with an alternative embodiment, of the present invention is applied;

FIG. 9 is a flowchart showing operational steps newly added to the main flowchart in the network analyzer shown in FIG. 8;

FIG. 10 is a schematic block diagram showing a configuration of an acquisition processor included in the arithmetic processor of the network analyzer to which applied is the statistical processing apparatus in accordance with the alternative embodiment of the present invention;

FIG. 11 is a schematic block diagram showing a configuration of a counting processor included in the arithmetic processor shown in FIG. 10;

FIG. 12 shows how to divide a stream of data counted by the counting processor shown in FIG. 11;

FIG. 13 shows an exemplary format for containing a resultant count in prior art;

FIG. 14 shows steps for a counting process by a counting function block shown in FIG. 11;

FIG. 15A shows an example of count result table containing a result of the counting process by the counting function block shown in FIG. 11;

FIG. 15B shows an example of a threshold value position table containing a result of the counting process by the counting function block shown in FIG. 11;

FIG. 16A shows a range of the counting process by the counting function block shown in FIG. 11;

FIG. 16B shows the delete of a resultant count in the initial stage, in the result counted by the counting function block, shown in FIG. 11;

FIG. 16C shows a process for shifting intervals by one interval after the delete shown in FIG. 16B;

FIG. 16D shows the delete of a count in the initial stage satisfying a condition after the process shown in FIG. 16C;

FIG. 17A shows an example of count result table before the delete, acquired by the count through the counting function block shown in FIG. 11;

FIG. 17B shows an example of threshold value position table before the delete, acquired by the count through the counting function block shown in FIG. 11;

FIG. 17C shows an example of count result, table after the delete, acquired by the count through the counting function block shown in FIG. 11;

FIG. 17D shows an example of threshold value position table after the delete, acquired by the count through the counting function block shown in FIG. 11;

FIG. 18 is a schematic block diagram showing a configuration of a packet collector included in an input interface circuit of a network analyzer to which applied is a statistical processing apparatus in accordance with another alternative embodiment of the present and

FIG. 19 is a schematic block diagram showing a configuration of the packet collector included in the counting processor of the network analyzer to which the statistical processing apparatus in accordance with the other alternative embodiment of the present invention is applied.

DESCRIPTION OF THE PREFERRED EMBODIMENTS

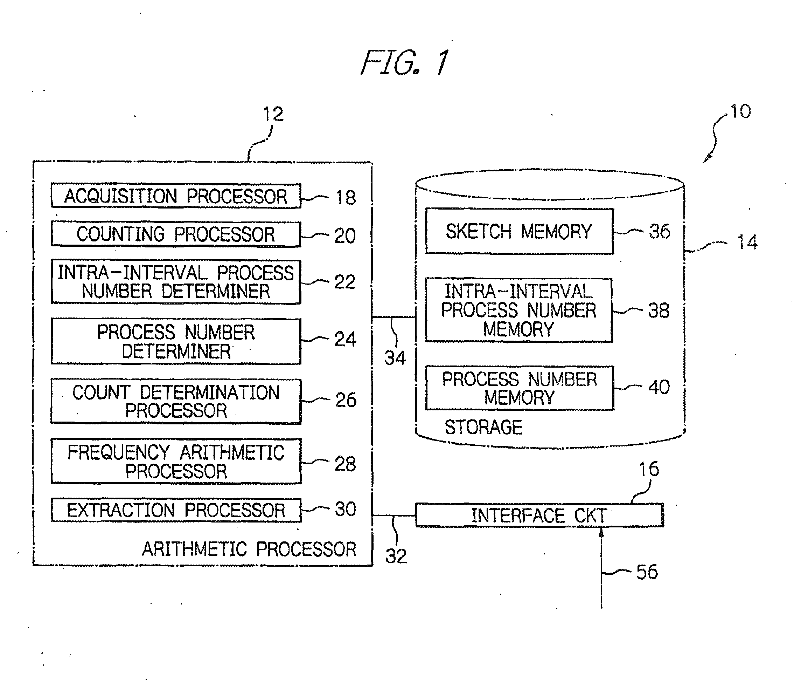

Reference will be made to accompanying drawings to describe in detail a statistical processing apparatus in accordance with pref erred embodiments of the present invention. With reference first to FIG. 1, the statistical processing apparatus in accordance with an illustrative embodiment of the present invention is directed to a network analyzer 10. The network analyzer 10 is adapted to deal with occurrence frequencies over the entire time intervals including the first and final intervals as a set of data of occurrence frequency to store the data in a storage 14, to count the occurrence frequency of values by an arithmetic processor 12 while deleting frequency information appropriate for a comparison made with respect to the stored frequency information, the arithmetic processor 12 determining whether to estimate the occurrence frequency of a value in the interval next to the first, one for that value of the frequency information stored in the storage 14 after a completion of counting for a predetermined number of data sets or each time a completion of counting the values of a data set in an interval, to store, when the determination is true, a value calculated by subtracting the occurrence frequency in the first interval from the estimated occurrence frequency in the storage 14 as the occurrence frequency in the data sets corresponding to the intervals the number of which is equal to the predetermined number on 1 and which are shifted by one interval, and to estimate the occurrence frequency in the interval next to the first one based on the set of occurrence frequencies to store the estimated occurrence frequency in the storage 14 as the occurrence frequency of the first or top interval in a next predetermined number of data sets shifted by one interval. While reducing the memory space and data processing capacity of the system required for the counting and statistical processes, the statistical frequency information can be extracted and acquired at a much shorter time interval than the conventional art that can merely acquire the occurrence frequency only after the process for a predetermined number of data sets.

More specifically, the network analyser 10 deals, as a set of data, with data of occurrence frequencies in the first and final ones of the intervals delimited for data sets, an occurrence frequency representing a count of the occurrence of each value of the data, and an error estimating value representing a count starting interval of that occurrence frequency representing the count of the occurrence of the value of the data, and stores the set of data in the storage 14 as frequency information related to counting. The arithmetic processor 12 searches the storage 14 storing the frequency information of the value in the data having an occurrence rate equal to or higher than a predetermined occurrence rate in one cycle period. The processor 12 processes the frequency information in the storage through addition, delete, and modification. The processor 12, after having performed those processes on the first data set, sets the data set shifted by one interval as a next cycle each time it processes the data for one interval, and performs the addition, delete and modification for the frequency information of the value for the data set of the next cycle so as to search for and acquire the frequency information of the value in the data having the occurrence rate equal to or higher than the predetermined occurrence rate. When the arithmetic processor 12 performs those processes, an acquisition processor 18 acquires the value of the data included in the stream of data, and a counting processor 20 newly adds the frequency information for the acquired value when no value is available for the supplied data and adds the occurrence frequency of the frequency information for the acquired value when the value is available to update the occurrence frequency. An infra-interval process number determiner 22 counts the number of processes for the data from the first data in each interval to store a resultant count in the storage 14 and to determine whether to reach an interval boundary based on the stored number of the processed data in the interval. A process number determiner 24 counts the number of the processes for the data from the start of the processes to determine whether or not the number of data sets less than the predetermined number has been processed on the basis of the number of the processed data stored in the storage 14. A count determination processor 26 deletes, after processing the data acquired in one interval, the frequency information having the occurrence frequency lower than the predetermined occurrence frequency in the data for the number of the processed intervals based non the occurrence frequency of the value and the error estimating value in the data set. A frequency arithmetic processor 28 adjusts the occurrence frequency by the counting processor 20 based on the error estimating value of each value for the data set in the first cycle stored in the storage 14, associated with the end of process of the counting processor 20 and the count determination processor 26, The processor 28 determines whether to estimate the occurrence frequency of the value in the interval next to the first interval. When the determination is true, the processor 28 stores a value calculated by subtracting the occurrence frequency in the first interval from the estimated occurrence frequency in the storage 14 as the occurrence frequency in the data sets corresponding so the intervals the number of which is equal to the predetermined number - 1 and which are shifted by one interval, and estimates the occurrence frequency in the interval next to the first one based on one set of occurrence frequencies to store this estimated occurrence frequency in the storage 14 as the occurrence frequency of the first interval in the next data sets for the predetermined number of intervals shifted by one interval. The arithmetic processor 14 consecutively processes the inputted data treated as data inputted from the first data of the final interval in the next cycle. While reducing the memory space and data processing capacity of the system required for the counting process and the statistical process, the statistical frequency information can thus be extracted and acquired at a much shorter time interval than the conventional art that can merely acquire the occurrence frequency only after the process for a predetermined number of data sets.

In the instant embodiment, the statistical processing apparatus of the present invention is applied to the network analyzer 10. Elements or parts not directly relevant to the understanding of the present invention will be omitted from the descriptions and drawings.

As shown in FIG. 1, the network analyzer 10 includes the arithmetic processor 12, the storage 14, and an interface circuit 16. The arithmetic processor 12 has a processing function based on data to be processed. The arithmetic processor 12 in this embodiment performs a statistical process to extract as a result a value having a occurrence rate equal to or higher than a value s [%] in a predetermined number N of pieces of data, each time the counting process is performed for a $1 / \varepsilon$ pieces of new data.

The arithmetic processor 12 further includes the data acquisition processor 18, the counting processor 20, the infra-interval process number determiner 22, the process number determiner 24, the count determination processor 26, the frequency arithmetic processor 28, and an extraction processor 30.

The data acquisition processor 18 has a function to acquire a value of data in a received signal, i.e. a stream of data. The data acquisition processor 18 determines and acquires the value of data in a received signal 32 supplied through the interface circuit 16. Signals or data are designated with reference numerals for connection lines on which they appear.

The counting processor 20 has a function to acquire the frequency information through a data addition process and an interval frequency addition process based on the determined and acquired value to supply the acquired frequency information to the storage 14 so as to add and update the acquired frequency information. More specifically, the counting processor 20 newly adds the frequency information for the acquired value in response to the absence of the value for the supplied data, and adds the occurrence frequency of the frequency information for the acquired value in response to the presence of the value to update the occurrence frequency.

The data addition process is to newly add the frequency information stored in the storage 14. The interval frequency addition process is to increase the value of a final interval frequency $y_n$ stored in the storage 14 to acquire the frequency information. The counting processor 20 supplies the acquired frequency information 34 to the storage 14 based on the value acquired by the data acquisition processor 18 so as to update the frequency information.

The infra-interval process number determiner 22 has a function to count the number of processes for the data from the first data in each interval to store the count in the storage 14, and to determine whether to reach an interval boundary based on the stored number of processed data in the interval. The infra-interval process number determiner 22 supplies a resultant count value 34 to the storage 14 to determine whether to reach the interval boundary based on the resultant count 34.

The process number determiner 24 has a function to count the number of the processed data from the start of the processes to determine whether to have processed the number of data equal to or more than the value $N$ based on the number of the processed data stored in the storage 14. The process number determiner 24 determines whether or not the pieces of data fewer than the value $N$ have been processed based on the stored number of processed data.

The count determination processor 26 has a function to update and delete the frequency information through a frequency addition process and a low-frequency data deletion process. The count determination processor 26, after processing the data acquired in one interval, deletes the frequency information for the occurrence frequency equal to or lower than the predetermined occurrence frequency in the data for the number of the processed intervals based on the occurrence frequency of the value and the error estimating value in the data set.

The frequency addition process determines the final frequency count $f$ based on the end of data processing in each interval boundary. The low-frequency data deletion process deletes the frequency information having a low occurrence frequency in the storage 14. The count determination processor 26 updates and deletes the frequency information.

The frequency arithmetic processor 28 has a function to calculate the occurrence frequency in the first interval based on the fixed frequency information derived from the N pieces of data. Particularly, as described below, when the N pieces of data are treated as one cycle, this embodiment properly calculates the occurrence frequency in the first interval of the next cycle. The occurrence frequency is an approximate value.

The frequency arithmetic processor 28 adjusts the occurrence frequency by the counting processor 20 based on the error estimating value of each value for the data set in the first cycle stored in the storage 14 associated with the end of process of the counting processor 20 and the count determination processor 26, and then determines whether to estimate the occurrence frequency of this value in the interval next to the first interval. In response to the true determination, a value calculated by subtracting the occurrence frequency in the first interval from the estimated occurrence frequency is stored in the storage 14 as an occurrence frequency in the data set corresponding to the intervals the number of which is equal to the predetermined number - 1 and which are shifted by one interval. Then, the occurrence frequency in the interval next to the first interval is estimated on the basis of one set of occurrence frequencies to be stored in the storage 14 as the occurrence frequency of the first interval in the next data set for the predetermined number of intervals shifted by one interval.

The extraction processor 30 has a function to extract the frequency count as the result of each value based on the frequency information stored in the storage 14 to display this frequency count on a display monitor, not shown.

In the illustrative embodiment, the statistical process using this function searches and extracts the occurrence frequency having an occurrence rate equal to or higher than the value $s$ [%] in the N pieces of data.

Now, the occurrence frequency having its occurrence rate equal to or higher than a value $s$-$\varepsilon$ [%] actually is extracted because of the allowable error rate $\varepsilon$. In other words, if $f \geq (s - \varepsilon) N$, then the frequency count $f$ is extracted as the occurrence frequency. More specifically, when the occurrence rate $s = 1$ [%] , and the allowable error rate $\varepsilon = 0.1$ [%], the purpose of the network analyzer 10 is to extract, the data having its occurrence rate equal to or higher than the value s [%], but there is a possibility that the data actually having the occurrence rate equal to or higher than 0.9 [%] is extracted because of the allowable error rate $\varepsilon$ of of 0.1 [%] .

Each of the components of the arithmetic processor 12 may be implemented by a separate, specialized device, i.e., specific hardware. However, for example, a computer, including a CPU (Central Processing Unit) of course, may be generally used as hardware to implement the processing steps performed by each processor in the arithmetic processor 12 through software or firmware by programming these steps in advance. Then, the arithmetic processor 12 performs the pre-programmed steps to process the counting, thus performing the statistical process. This statistical process stores the acquired data 34 in the storage 14.

The storage 14 has a function to store data. The storage 14 in this embodiment temporarily or rather permanently stores data or values such as the frequency information, acquired by the process in the arithmetic processor 12. Specifically, the storage 14 may be implemented by semiconductor devices such as a RAM (Random Access Memory) or a storage having a large storage capacity such as an HDD (Hard Disk Drive).

The storage 14 functions to store results acquired in the processes by the arithmetic processor 12 and to delete the stored result in response to a supplied control signal. The storage 14 includes a sketch memory 36, an infra-interval process number memory 38, and a process number memory 40. The sketch memory 36 is adapted to store the frequency information 34 from the data acquisition processor 18, and delete the stored frequency information 34 in response to a control signal 34 from the count determination processor 26. The sketch memory 36 provides the frequency information satisfying a condition in response to the control signal 34 on the search of the extraction processor 30.

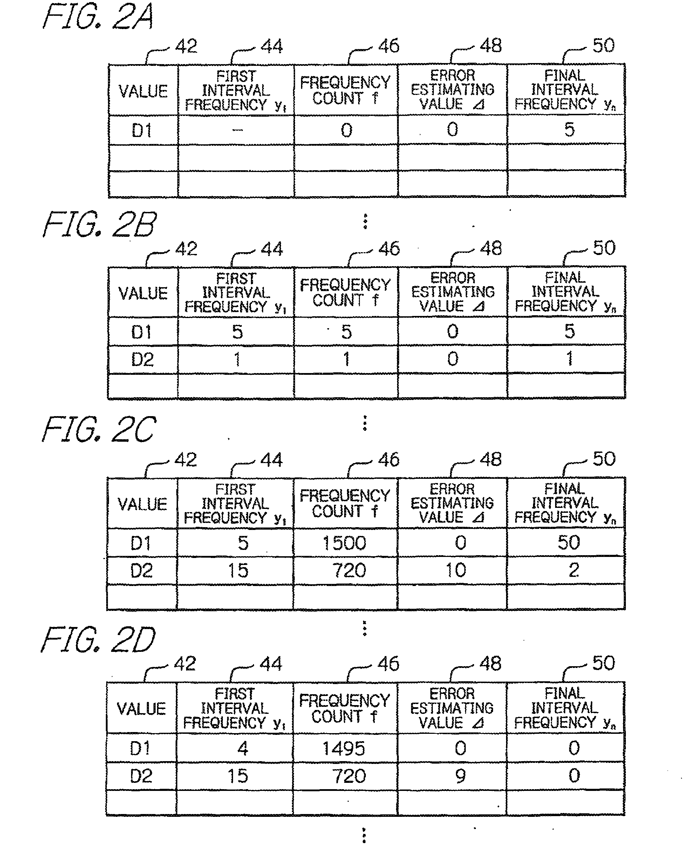

FIGS. 2A to 2D show examples of the frequency information stored in the sketch memory 36. The sketch memory 36 stores the frequency information including a set of items of a value 42 of occurring data, the occurrence frequency, i.e. a frequency count $f$ 46 representing an occurrence count, an error estimating value $\Delta$ 48 of the occurrence frequency, the first interval frequency $y_1$ 44, and the final interval frequency $y_n$ 50 in the form of data table. The frequency information is added, updated, or deleted by the process in the counting processor 20. Steps of the statistical process by the network analyzer 10 will be described below with reference to FIGS 2A to 2D.

The infra-interval process number memory 38 stores the number of data processed in the current interval based on the process in the infra-interval process number determiner 22.

The process number memory 40 stores the number of processed data and the number of processed interval boundaries, i.e. intervals from the start of the statistical process based on the process in the process number determiner 24. The stored number of interval boundaries for the current interval, when having its interval number equal to five, for example, is four, calculated by subtracting one from this interval number. 'I'hen, the processes for all the data in the current interval is determined to be finished, and then the value, five, is stored.

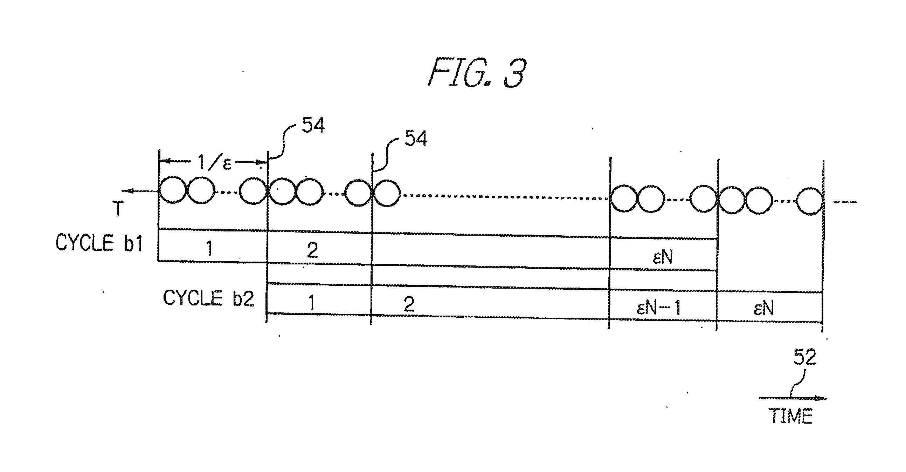

Now, FIG. 3 shows the concept of data in the statistical process. The circles in the figure indicate respective pieces of the data. The data in FIG. 3 are to be processed from the left in chronological order. Therefore, time progresses in the direction of an arrow 52. As described above, it is assumed that the N pieces of data are virtually divided by the value 1 / $\varepsilon$ into the intervals, and that each boundary of the intervals is referred to as an interval boundary 54. Each interval is designated with a number $b$ starting from unity in sequence.

For example, if $N = 100000$, the number $\varepsilon N$ of intervals is equal to (0.1 / 100) x 100000 = 100. Therefore, 100,000 pieces of data are divided by 1,000 into 100 intervals.

The network analyzer 10 in the instant illustrative embodiment, after processing the *N* pieces of data, performs statistical processes for searching and extracting a value having its occurrence rate equal to or higher than a predetermined occurrence rate each time finishing a counting process in the interval consisting of the $1 / \varepsilon$ pieces of data as a unit less than the value *N*. In FIG. 3, after the process for extracting a value having its occurrence rate equal to or higher than the predetermined occurrence rate in the *N* pieces of data in a cycle *b1*, the $1 / \varepsilon$ pieces of data are newly processed, and then the process for extracting the value is performed in the *N* pieces of data in a cycle *b2* under the similar condition. In this way, each time newly acquiring the $1 / \varepsilon$ pieces of data, the process for extracting a value matching the condition is continued.

At this time, since the *N* pieces of data shifted by one interval do not include the occurrence frequency in one displaced interval compared with the *N* pieces of data before shifted by one interval, the occurrence frequency in this displaced interval has to be subtracted. However, storing the occurrence frequency in each interval causes an increase in memory space to significantly impair the effect of reducing the memory space. This is caused since the memory space for each of the data pieces needs to be basically prepared in order to store each occurrence frequency in the plural ($\varepsilon N$) intervals.

Thus, the network analyzer 10 in this embodiment, when determining that subtraction for the occurrence frequency is required, for example, when not deleting the frequency information because of the high occurrence frequency, approximately estimates the occurrence frequency in the second interval as the first interval in the *N* pieces of data shifted by one interval based on the occurrence frequency $y_1$ of the first interval and the occurrence frequency $y_n$ of the final interval as the $\varepsilon N$-th interval in the *N* pieces of data.

Now, the instant embodiment uses an expression of quadratic curve to estimate the occurrence frequency. This can estimate the occurrence frequency for each value in the *N* pieces of data each time finishing the process in one interval after the $\varepsilon N$-th interval to extract this result.

Such a principle for extracting by the network analyzer 10 will be described with respect to the cycles *b1* and *b2* in FIG. 3. When the result of the frequency count *f* for the *N* pieces of data in the first to $\varepsilon N$-th intervals of the cycle *b1* has been already acquired by the process, this result also includes the reflection of the result in the first to $(\varepsilon N\text{-}1)$-th intervals of the cycle *b2*. In addition, the result in the first to $(\varepsilon N - 1)$-th interval s of the cycle *b2* will be acquired by merely processing the value in the next interval.

However, at this time, the occurrence frequency in the first interval of the cycle *b1* may be included extra. Thus, the occurrence frequency in the first interval of the cycle b1 is subtracted from the result processed in the first to $\varepsilon N$-th intervals of the cycle, b1 to set this resulting value as the result processed in the first to $(\varepsilon N - 1)$ -th intervals of the cycle *b2*. In addition, in order to continue such a process, this embodiment properly estimates the approximate occurrence frequency in the first interval of the cycle to subtract this occurrence frequency.

Returning to FIG. 1, the interface circuit 16 has a function to receive a signal including data to be processed from an external device or circuit to convert the format of the received signal. The interface circuit 16 receives a received signal 56 from the exterior to supply the received data 32 to the arithmetic processor 12.

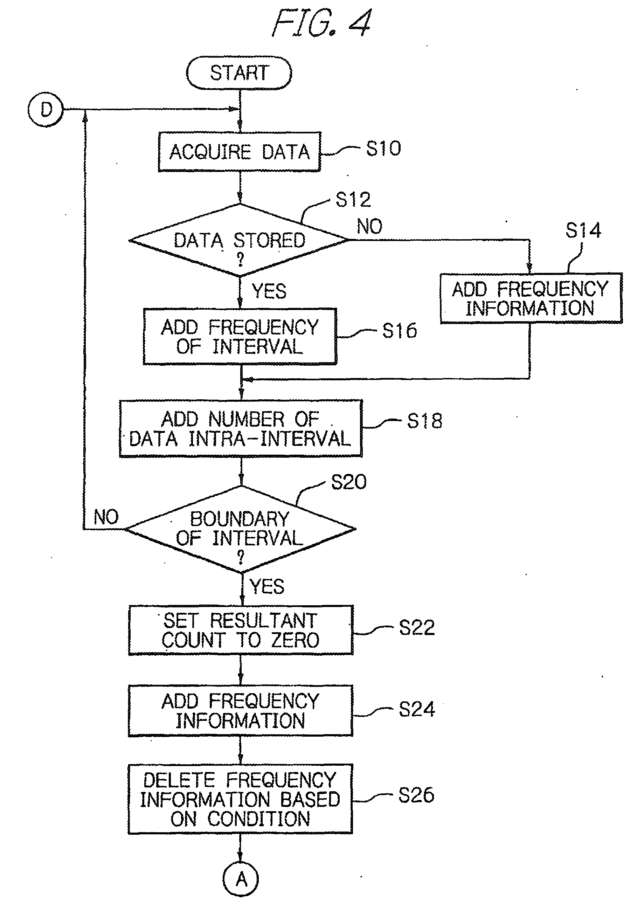

Next, it will be described with reference to FIGS. 4, 5 and 6 how the statistical processing apparatus applied to the arithmetic processor 12 of the network analyzer 10 performs operational steps. The examples of frequency information shown in FIGS. 2A to 2D are properly used for the description.

First, the received signal 56 including data is received by the interface circuit 16 to convert the data in format processable by the arithmetic processor 12. The data 32 converted by the interface circuit 16 is supplied to the data acquisition processor 18 of the arithmetic processor 12. The value of the acquired data is determined through the data acquisition process in the data acquisition processor 18 (Step S10).

Next, it is determined whether or not the determined value as the frequency information is already stored (Step S12). The counting processor 20, for example, right after the start of the process, when determining that the frequency information is not stored in the sketch memory 36 (NO), progresses the step to a frequency information addition process (to Step S14). Meanwhile, when determining that design items related to this value are already stored (YES), the step progresses to an interval frequency addition process (to Step S16).

Next, the frequency information addition process generates the frequency information related to this data to supply the generated frequency information 34 to the sketch memory 36, and stores the information 34 in the memory 34 (Step S14). More specifically, the counting processor 20 sets the error estimating value $\Delta$ in the frequency information to a value $b - 1$ calculated by subtracting one from the interval number *b*. This process sets, for example, the value $b - 1$ to zero when the interval number is equal to one immediately after the start of the process. The counting processor 20 also sets to one the final interval frequency $y_n$, which will be a resultant count in the interval. However, at this moment, the frequency count *f* and the first interval frequency $y_1$ are not yet determined. After this process, the step proceeds to a counting process for the number of the data processing in the interval (to Step S18).

Next, the interval frequency addition process increments the final interval frequency $y_n$, by one (Step S16). The intra-interval process number determiner 22 supplies the incremented final interval frequency $y_n$ 34 to the sketch memory 36 to have the frequency $y_n$ 34 stored in the memory 36. After this process, the step progresses to the counting process for the number of the data processing in the interval (to Step S18).

The counting process for the number of the data processing in the interval increments by one the number of processed data in the interval stored in the infra-interval process number memory 38 through the intra-interval process number determiner 22 (Step S18).

Next, it is determined whether or not the interval boundary is reached (Step S20) by determining whether or not the number of processed data in the interval is equal to the value $1/\varepsilon$. When determining that the interval boundary is not reached (NO), the step returns to the data acquisition process.

For example, with reference to FIG. 2A, the steps will be described. An item 42 indicating the value in FIG. 2A shows that the value *D1* appears five times in the interval #1. At this moment, the undetermined frequency count *f* is set to zero, and the first interval frequency $y_1$ is set to be empty.

When determining that the interval boundary is reached through the intra-interval process number determiner 22 (YES), the step proceeds to Step S22 for resetting the number of processed data in the interval.

The reset process sets the number of processed data in the interval included in the intra-interval process number determiner 22 to zero (Step S22).

Next, the count determination processor 26 determines the frequency count *f* as a kind of frequency information through the frequency addition process (Step S24). The frequency addition process adds the final interval frequency $y_n$ after the data processing in the interval to the frequency count *f*. In addition, the final interval frequency $y_n$ is set to the first interval frequency $y_1$ only in the interval including added frequency information.

Specifically, with respect to the value *D1* of the item 42 shown in FIG. 2B, the final interval frequency $y_n$ equal to five is added to the frequency count *f* to set the frequency count *f* in the item 46 as the addition result to 0 + 5 = 5. The first interval frequency $y_1$ in the item 44 is also set to five.

Next, the low-frequency data deletion process deletes the frequency information based on a condition (Step S26). The deletion condition is that the occurrence rate is equal to or lower than the allowable error rate $\varepsilon$ [%] from the start of the process to the current interval in the count determination processor 26. The count determination processor 26 searches for a value having its occurrence rate satisfying the deletion condition so as to delete the frequency information related to the searched and acquired value in the sketch memory 36.

As described above, since the number of data pieces in one interval is equal to $1/\varepsilon$, the occurrence rate is equal to the value $\varepsilon$ [%] in the interval with one occurrence of data. Therefore, from the start of the process to the current interval where the process is finished, the frequency information having its occurrence frequency equal to or lower than the current interval number b will be deleted in the sketch memory 36.

In addition, since the low-frequency data deletion process is performed each time the frequency addition process is finished in the interval boundary, for example, the low-frequency data deletion process may have deleted the frequency information in the previous interval. Thus, the low-frequency data deletion process also needs to be in response to the frequency count *f* having a possibility to have been deleted through the previous low-frequency data deletion process.

The error estimating value $\Delta$ in the item 48, as described above, contains the value *b* - 1 calculated by subtracting one from the interval number *b* when the addition process is performed for the frequency information. It is understood that this error estimating value $\Delta$ reflects the counting for data from the interval *b* to the frequency count *f*. For example, it is understood that the frequency information stored, in the sketch memory 36, when including the frequency count *f* equal to 20 and the error estimating value $\Delta$ equal to 10 related to certain data, the addition process is performed for the frequency information in the interval #11, and the occurrence frequency from this interval is equal to 20. In addition, this means that the counting for data before the interval *b* - 1 is not reflected to the frequency count *f*.

As described above, when having the averaged occurrence frequency equal to or lower than one in the interval, the frequency information will be deleted. Therefore, the frequency count *f* (occurrence frequency) is equal to a value *b* -1 = $\Delta$ for the final interval frequency $y_n$, in other words, the occurrence frequency averagely equal to one in the intervals up to the interval number *b* - 1. In practice, since the final interval frequency $y_n$ may be averagely equal to or lower than one, the error estimating value $\Delta$ will represent the maximum value of the frequency count *f* having a possibility to have been deleted.

Based on the processing described above, the low-frequency data deletion process depletes the frequency information including the frequency count *f* and the error estimating value $\Delta$ satisfying an inequality, $f + \Delta \le b$, through the count determination processor 26 in the sketch memory 36. This low-frequency data deletion process is performed each time the interval boundary is reached, arranging the frequency information in the sketch memory 36.

For example, in the sketch memory 36 having its state shown in FIG. 2B, the inequality results in $2 + 0 \le 1$ for the value *D1* to leave the frequency information after the process in the interval #1, and results in $1 + 0 \le 1$ for the value *D2* to delete the frequency information.

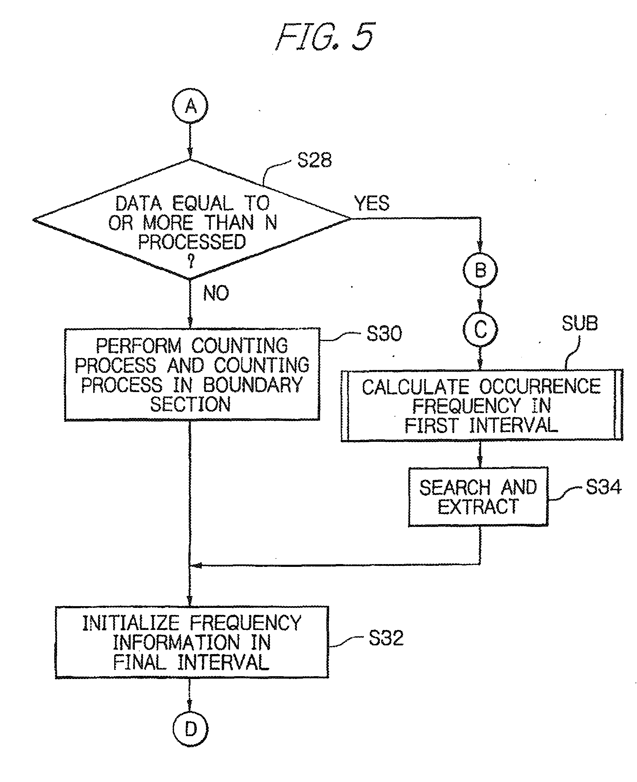

After the low-frequency data deletion process, the step progresses to Step S28 for determining the number of data processing shown in FIG. 5 through a connector A.

Next, it is determined whether or not the number or processed data is lower than the value *N* (Step S23). In other words, the process number determiner 24 of this embodiment determines whether or not the data in the interval having an interval number less than the value $\varepsilon N$ are processed based on the number of data processing stored in the process number memory

When determining that the number of processed data is less than the value $N$ (NO), the control proceeds to Step S30, the counting process. Alternatively, when determining that the number of processed data is equal to or more than $N$, the step progresses to Subroutine SUB, i.e. an approximate process for the occurrence frequency in the first interval through connectors $B$ and $C$.

The counting process increments the number of data processing stored in the process number memory 40 by the value $1 / \varepsilon$, and further increments the number of interval boundaries representing the number of processed intervals by one (Step S30). After this counting process, the step progresses to Step S32 for initializing the occurrence frequency in the final interval.

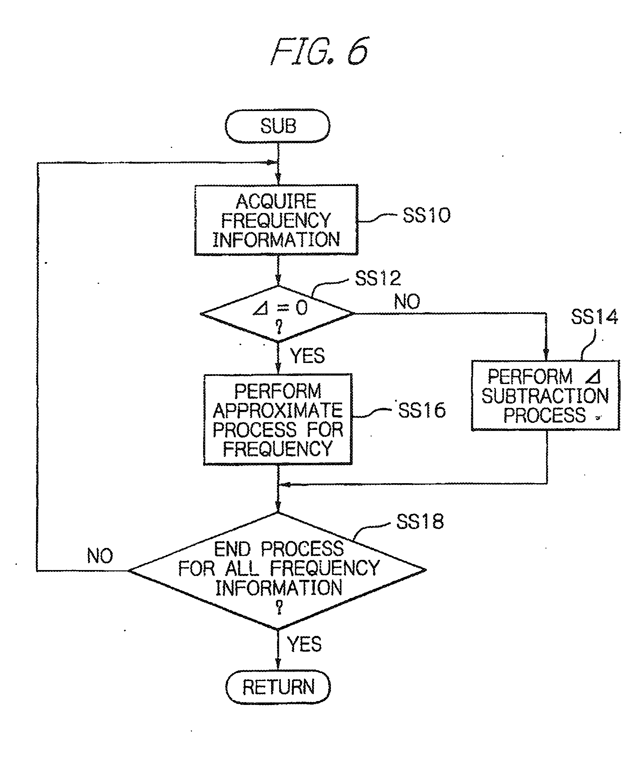

The other process, i.e. the approximate process for the occurrence frequency in the first interval is performed by the frequency arithmetic processor 28 (Subroutine SUB). This approximate process is always performed after the processes for the number of data equal to or more than the value $N$. The steps in this approximate process will be further described below with reference to FIG. 6.

Next, searching and extracting are performed on the basis of the occurrence frequency stored in the sketch memory 36 (Step S34). The network analyzer 10 continues an occurrence frequency arithmetic process for the first interval after the $N$-th data to extract the result through the search/extraction processor 30 after each process for the $1 / \varepsilon$ pieces of data. After this extraction, the step progresses to Step S32 for initializing the occurrence frequency in the final interval.

The process for initializing the occurrence frequency in the final interval sets the final interval frequency $y_n$ of the frequency information related to each value to zero in the counting processor 20 (Step S32). Then, the step returns to the data acquisition process through a connector D, consecutively processing the next supplied data as described above.

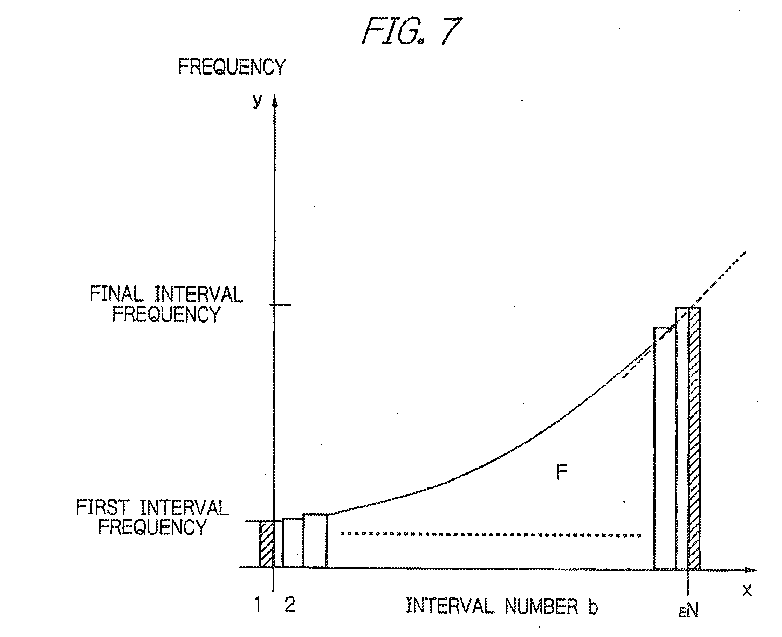

Now, the steps of the arithmetic process for the occurrence frequency in the first interval by the frequency arithmetic processor 28 will be described with reference to FIGS 6 and 7. First, the frequency information is acquired (Substep SS10). In the acquisition process for the frequency information, the frequency information 34 related to a certain stored value is acquired from the sketch memory 36.

Next, it is determined whether or not the error estimating valued $\Delta$ is equal to zero (Substep SS12). When the error estimating value $\Delta$ is not equal to zero (NO), the step progresses to the subtraction process for the error estimating value $\Delta$ (to Substep SS14). Alternatively, when the error estimating value $\Delta$ is equal to zero (YES), the step progresses to Substep SS16, a frequency approximate process.

In the subtraction process, since the first interval frequency $y_1$ is not reflected on the frequency count $f$, the error estimating value $\Delta$ is decremented by one (Substep SS14). This means conceptual shifting of intervals after completing the addition process by one interval. Next, the step progresses to Substep SS18 to determine whether to finish the processes for all the frequency information,

In the frequency approximate process, the frequency arithmetic processor 28 subtracts the first interval frequency $y_1$ a from the frequency count $f$ to calculate the frequency count f from the first to $(\varepsilon N- 1)$ th intervals (data) after the shifting by one interval (Substep SS16). The frequency approximate process also has a function to determine whether or not the frequency count $f$ satisfies the inequality, $f \leq \varepsilon N - 1$.

Now, the estimation of the occurrence frequency in the second interval will be described with reference to FIG. 7. Since the average occurrence frequency in the interval is equal to or less than one when the condition $f \leq \varepsilon N - 1$ is satisfied, the frequency information related to the value is deleted from the sketch memory 36. Alternatively, when the condition $f \leq \varepsilon N - 1$ is not satisfied, the approximate occurrence frequency $y_2$ of the second interval as the occurrence frequency of the first interval after the shifting by one interval is approximately estimated from the current first interval frequency $y_1$, the final interval frequency $y_n$ and the frequency count $f$ to calculate the approximate value $y_2$.

As shown in FIG. 7, the approximate value $y_2$ is calculated by conceptually assuming a histogram of the occurrence frequencies in the intervals. At this time, it is assumed that the occurrence frequency in the first interval is the first interval frequency $y_1$, the occurrence frequency in the $\varepsilon N$-th interval is the final interval frequency $y_n$, and the histogram from the first interval to the $\varepsilon N$-th interval is along a certain quadratic curve. It is also assumed that this curve passes through, for example, the points $(1, y_1)$ and $(\varepsilon-N, y_n)$ on the two-dimensional coordinates . In addition, the curve is defined so that the area surrounded by the lines x = 1, x = $\varepsilon N$, y = 0 and the curve is equal to the region $F$.

Now, the area $F$ is defined by the expression $F = f - (y_1 + y_n) / 2$, which is modified by subtracting the areas before the center of the first interval and after the center of the final interval from the area represented by the frequency count $f$. The approximate value $y_2$ of the interval frequency in the second interval is calculated through an expression (1) representing this quadratic curve,

$$y_2 = 6\frac{F}{(\varepsilon N - 1)^2}\left(1 - \frac{1}{\varepsilon N - 1}\right) + \frac{y_n}{\varepsilon N - 1}\left(\frac{3}{\varepsilon N - 1} - 2\right) + y_1\left(1 - \frac{4}{\varepsilon N - 1} + \frac{3}{(\varepsilon N - 1)^2}\right)$$

$$\cdots(1)$$

If the calculated value is negative, the value is set to zero. The expression (1) is derived by acquiring coefficient values satisfying the condition $(1, y_1)$, $(\varepsilon N, y_n)$, and the integral value $F$ from x = 1 to $\varepsilon N$ in the general expression of the quadratic curve.

An example will be specifically described. In the values shown in FIG. 2C, since the error estimating value $\Delta$ for the value D1 is equal to zero, the approximate process is performed for the frequency. First, the first interval frequency $y_1 = 5$ its subtracted from the frequency count $f = 1500$ to acquire a value 1495. This is the frequency count $f$ in the number $\varepsilon N - 1$ of intervals from 1 to $\varepsilon N - 1$, in other words, the $(N - 1 / \varepsilon)$ pieces of data in a cycle #2.

Next, the data value $D1$ is associated with the first interval frequency $y_1 = 5$, the final interval frequency $y_n = 50$, the frequency count $f = 1500$, and $\varepsilon N = 100$. Thus, those values are substituted for the expression (1) to store the resulting value $y_2 = 3.95 \approx 4$ as the approximate value of the first interval frequency $y_1$ in the new cycle $b2$. Since the error estimating value $\Delta$ related to the value $D2$ is not equal to zero, a value 10 - 1 = 9 is stored as the error estimating value $\Delta$ through a $\Delta$ subtraction process.

This process results in the frequency information related to each value stored in the sketch memory 36, as shown in FIG. 2D. This means that the process has finished in the intervals 1 to $\varepsilon N - 1$ of the cycle $b2$. In the cycle $b2$, the data in the interval $\varepsilon N$ are processed. The first interval frequency is calculated as described above to result in finishing the process before the interval $\varepsilon N - 1$ in a certain cycle. Therefore, the next interval is processed to result in finishing the process for the N pieces of data in this cycle.

Note that, in the frequency information addition process of the next interval, the value stored as the error estimating value $\Delta$ is always equal to a value $\varepsilon N - 1$.

As described above, the network analyzer 10 in this embodiment can continue an occurrence frequency arithmetic process for the first interval from the $N$-th data to extract the result through the search/extraction processor 30 each time the process was completed for the number $1 / \varepsilon$ of data. The network analyzer 10 can extract the frequency information related to the value having the frequency count $f$ equal to or more than a value $(s - \varepsilon)$ $N$ left in the sketch memory 36 by the extraction processor 30.

Returning to FIG. 6, after the subtraction and frequency approximate processes, it is determined whether or not all the frequency information was processed (Substep SS18). If the process is not finished (NO), the step returns to the acquisition Substep SS10 for the frequency information. If the process is finished (YES), the step progresses to the return to finish the occurrence frequency arithmetic process for the first interval.

The extraction processor 30 processes the search/extraction to output the acquired result on a display monitor, not shown.

In the network analyzer 10 of the instant embodiment, the frequency arithmetic processor 28 of the arithmetic processor 12 calculates the occurrence frequency in the first interval, thereby processing the frequency information in the next cycle to store this information in the sketch memory 36. This needs neither the overlap of the sketch memory 36 for each cycle nor the parallel processing for the same processes. The result from processing the N pieces of data can be extracted each time the $1 / \varepsilon$ pieces of data have been processed. At this time, the frequency count $f$ in the first to $(\varepsilon N - 1)$ - th intervals shifted by one interval is calculated and the second interval frequency $y_2$ as the first interval frequency in the next interval is appropriately calculated based on the expression of the quadratic curve derived from the first interval frequency $y_1$, the final interval frequency $y_n$, and the frequency count $f$, and the resulting value is subtracted from the frequency count $f$. Thereby, the occurrence frequency in the first interval of the previous cycle can be excluded from the next cycle. This can provide the more accurate counting process and statistical process to extract the more accurate result.

When data for starting the process in each cycle are shifted by the intended number $w$ equal to or less than 1 $/ \varepsilon$ of data to perform the counting process in each cycle in parallel as described above, the overlap in the process and the memory space is only for the $1 / (\varepsilon w)$ pieces of data. This can extract the result in a shorter time interval. The parallel processes would require the $N / w$-fold memory space and data processing capacity if the processes were not performed in accordance with this embodiment. Compared to this, the instant embodiment consumes only the $1 / (\varepsilon N)$ -fold memory space and processing time. Therefore, the larger value $\varepsilon N$, the more reduced the memory space and the more improved the data processing capacity.

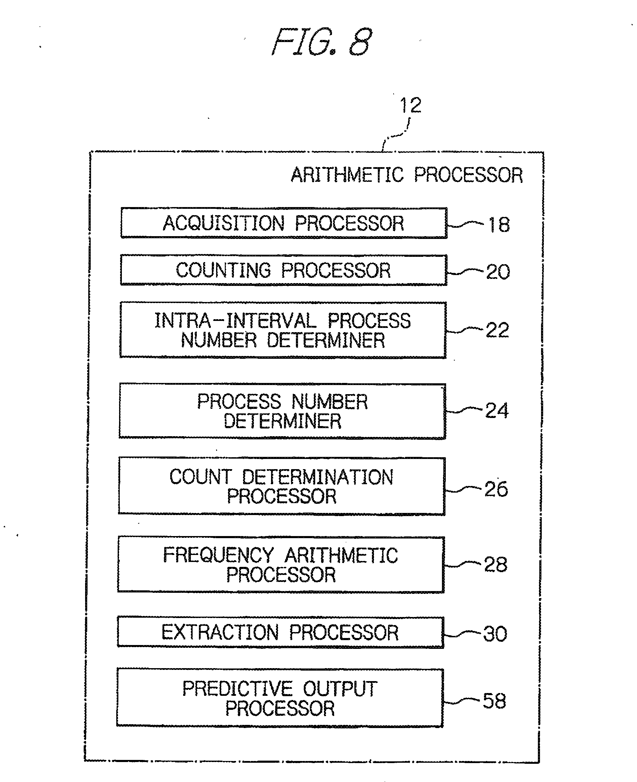

Next, an alternative embodiment will be described of the statistical processing apparatus in accordance with the present invention. Similar components and elements are designated with identical reference numerals and repetitive descriptions thereon will be omitted. The arithmetic processor 12 of this alternative embodiment includes, as shown in FIG. 8, a predictive output processor 58 in addition to the components of the previous embodiment.

The predictive output processor 58 has a function to process, before updating the frequency information by the occurrence frequency arithmetic process for the first interval, the pieces of data equal to or more than the value $N$ to estimate the rate of change in occurrence frequency, and to calculate the trend of change in occurrence frequency for each value to generate warning information based on the resulting trend. The predictive output processor 58 estimates the rate of change in occurrence frequency to calculate the trend of change in occurrence frequency for each data, and outputs the generated warning information to a display monitor or a speaker, not shown, based on the resulting trend to inform a user of the warning information.

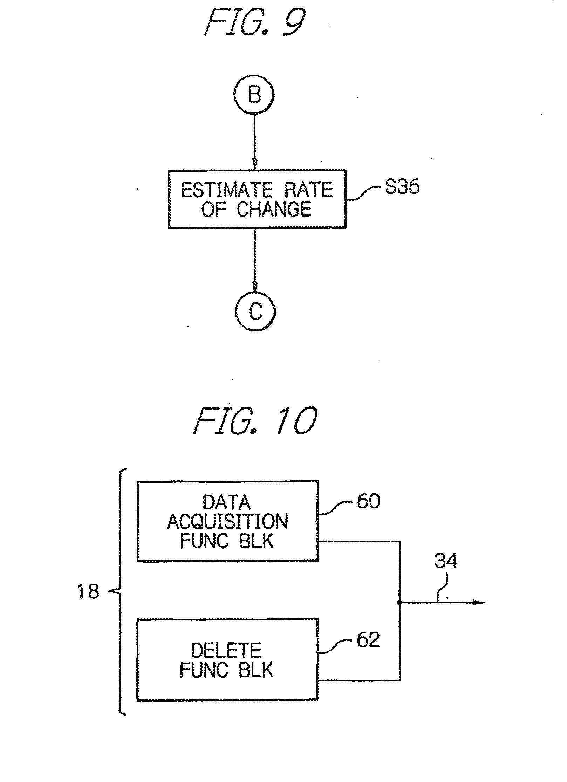

The operation of the instant alternative embodiment is simply illustrated in FIG. 9. The instant alternative embodiment differs in operation from the previous embodiment in that a rate-of-change estimation process is provided between the connectors Band C. Thus, as seen from the connection of the control flow, the rate-of-change estimation process is performed before the update of the frequency information by the occurrence frequency arithmetic process for the first interval.

In the rate-of-change estimation process, the predictive output processor 58 processes the data equal to or more than the value $N$ to estimate the rate of change in occurrence frequency, and calculates the trend of change in occurrence frequency for each value to generate the warning information based on the resulting trend (Step S36).

In the predictive output processor 58, the derivative value of the quadratic curve for the expression (1) described earlier is calculated through an expression (2):

$$y'_n = 2\frac{y_1}{\varepsilon N - 1 - \Delta} + \frac{y_n}{\varepsilon N - 1 - \Delta} - 6\frac{F}{(\varepsilon N - 1 - \Delta)^2} \qquad \cdots(2)$$

The derivative value $y'_n$ calculated as the rate of change estimated in the $\varepsilon N$-th interval as the final interval.

At this time, the present alternative embodiment differs from the previous embodiment by the presence of the case of the error estimating value $\Delta > 0$. In this case, the estimated value of the rate of change will be calculated on the basis of the frequency count f counted, from the $(\Delta + 1)$ -th, in other words, $b$-th interval instead of the first interval. In addition, if $\Delta > \varepsilon N - 2$, then the approximate process for the quadratic curve cannot be performed to disable the estimated value of the rate of change from being calculated. Therefore, the rate of change will not be estimated.

The predictive output processor 58 determines whether or not a predetermined condition is satisfied on the basis of calculating the estimated value of the rate of change. For example, in order to monitor the occurrence frequency equal to or higher than a predetermined value, it is determined whether or not the frequency count $f$ has a possibility of exceeding the predetermined value based on the calculated rate of change in the predetermined number of data pieces ahead. In the predictive output processor 58, any condition can be defined so as to warn of the prediction when the calculated rate of change is determined to have the possibility equal to or higher than a predetermined value.

With reference to FIG. 2C as an example, the data value $D1$ is associated with the first interval frequency $y_1$ = 5, the final interval frequency $y_n$ = 50, the frequency count $f$ = 1500, and $\varepsilon N$ = 100, substituting these values for the expression (2) to acquire 5.17 by calculating the estimated value of the rate of change. The data value $D2$ is associated with the first interval frequency $y_1$ = 15, the final interval frequency $y_n$ = 2, the frequency count $f$ = 720, and $\varepsilon N$= 100, substituting these values for the expression (2) to acquire -0.18 by calculating the estimated value of the rate of change.

Now, in the predictive output processor 58, for example, a condition is defined such as to give warning when the frequency count $f$ has a possibility of exceeding a threshold value of 1550 within the twenty intervals ahead. Since the estimated value of the rate of change for the value $D1$ is equal to 5.17, the frequency count $f$ may increase to 5.17 x 20 = 103.4 in the twenty intervals ahead. In this case, since 1500 + 103.4 = 1603.4, a threshold value of 1550 is estimated to be exceeded. Therefore, the predictive output processor 58 generates the warning information.

It is noted that the estimated value of the rate of change for the value $D2$ is equal to -0.18 to be on a decreasing trend. The frequency count $f$ is unlikely to exceed the threshold value of 1550. Therefore, the predictive output processor 58 does not generate the warning information.

In the instant alternative embodiment, the predictive output processor 58 can calculate the rate of change in occurrence frequency for the $\varepsilon N$-th interval as the final interval in the N pieces of data through a derivative value of the above-described quadratic curve based on the first interval frequency $y_1$, the final interval frequency $y_n$, and the frequency count $f$ for each value stored as the frequency information in the sketch memory 36, thereby estimating an increasing or decreasing trend of the occurrence frequency for each value.

Then, the network analyzer 10, when determining that the occurrence frequency has a possibility of increasing to approximation of the threshold value based on the resulting trend of the occurrence frequency, can generate the warning information based on the predetermined condition for an increase in the occurrence frequency to previously inform an operator of the warning. This can further improve the reliability of analysis of the occurrence frequency.

In the instant alternative embodiment, the relationship between the first interval frequency $y_1$, the final interval frequency $y_n$ and the frequency count $f$ may be defined by a quadratic curve to calculate the occurrence frequency for the second interval corresponding to the first one of the intervals shifted by one interval. However, other curves may be used for the approximation instead of a quadratic curve. One of other preferred curves is based on, for example, a model of change in occurrence frequency.

The network analyser 10 in those two illustrative embodiments processes the data 56 acquired through the interface circuit 16. However, after storing the N pieces of data in the storage 14 temporarily, the arithmetic processor 12 may perform the various processes.

In addition, the network analyzer 10 updates the final interval frequency $y_n$, thereby storing the counted occurrence frequency in one interval in the final interval frequency $y_n$ temporarily to update and reflect this resultant count to the frequency count $f$ after the process for one interval. However, instead of this method in some cases, the update may be processed at the same time. Alternatively, the frequency count $f$ may be updated in the process for each interval, and the final interval frequency $y_n$ may also be updated for only the final interval.

The network analyzer 10 is adapted to extract data appearing with the occurrence frequency equal to or higher than a predetermined value from time-serial data, and includes a statistical method. However, in an practical application, this analyser may be used for part of a visualization device informing an operator of a predetermined warning message on the basis of data related to the high occurrence frequency for visual check by the operator based on the value, or for reprocessing before an expensive analyze process in order to restrict a processed object to data related to the high occurrence frequency.

Next, the improvement of the counting process will be described in the arithmetic processor 12 of the network analyzer 10 utilizing the statistical processing apparatus in accordance with the present invention. The arithmetic processor 12 receives time-serial data, and counts the occurrence frequency of data or a value such as an IP address appearing in the time-serial data.

The data acquisition processor 18, as shown in FIG. 10, includes a data acquisition function block 60, and a delete function block 62. The data acquisition function block 60 has a function to acquire a value of data included the received data. The delete function block 62 has a function to delete a count obtained in an initial stage from the counts stored in the storage 14.

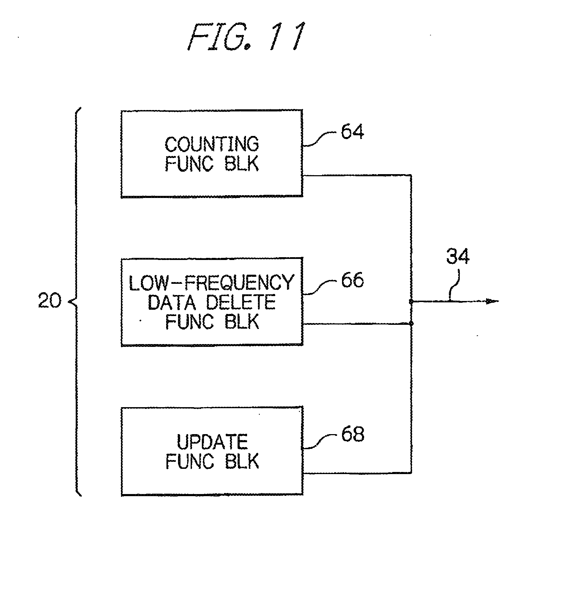

The counting processor 20, as shown in FIG. 11, includes a counting function block 64, a low-frequency data delete function block 66, and an update function block 68. The counting function block 64 has a function to receive the time-serial data to count the occurrence frequency of the same data or value, and send the resultant count to the storage 14 to store the latter.

The low-frequency data delete function block 66 has a function to delete the count having a low occurrence frequency from the counts stored in the storage 14. The update function block 68 has a function to consecutively receive, after the counting function block 64 counts a predetermined number of streams of data, an additional stream of data to store the resultant count in the storage 14. The update function block 68 additionally receives streams of data corresponding in number to one interval so as to update the count result. As described above, the previous count result stored in the storage 14 is updated with the additional count result.

Each function block may be implemented by hardware such as an electronics circuit, or by an arithmetic unit such as a CPU or a microcomputer, not shown, and software for defining the functions. These components may be entirely or partially formed into an integral structure.

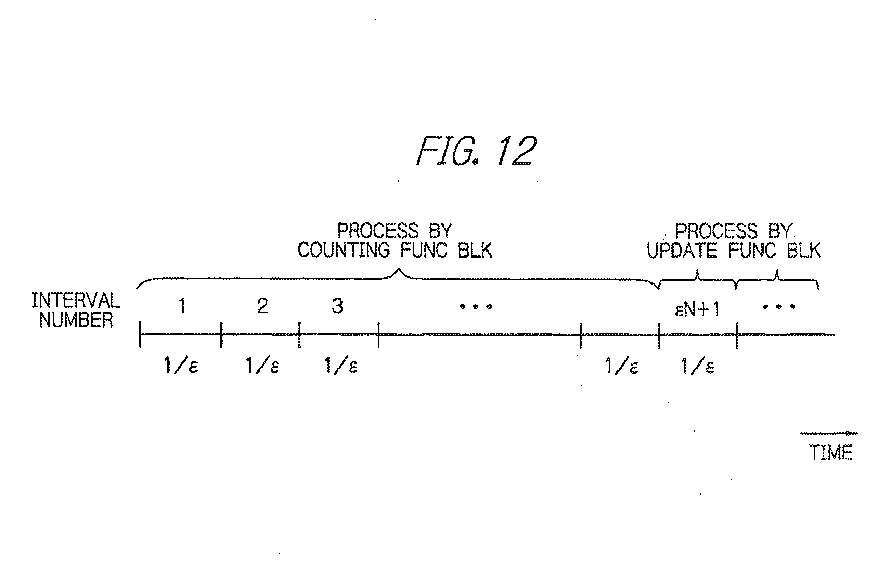

Reference will be made to FIG. 12 to describe an operation for dividing the stream of data to be counted in the counting function block 64. The counting function block 64, when counting a stream of data, sets an input buffer having its storage size predetermined in the storage 14 to input a stream of data into the buffer for counting.

In this case, the input buffer has its buffer size sufficient for counting the N pieces of data. In addition, for convenience of processing steps described below, the input buffer is divided into a plurality of segments. The division has three criterions.

(1) Before counting the stream of data, an allowable error is set to a value $\varepsilon$.
(2) The number of data pieces in one interval is set to a value $1/\varepsilon$.
(3) The total number of intervals is represented by a value $\varepsilon N$. Each interval has its interval number specific thereto, the number starting from one.

The counting function block 64 counts the first N pieces of data or values, in other words, the data or values in the first to $\varepsilon N$-th intervals. The update function block 68 counts the data in the subsequent intervals.

In the counting process of the counting function block 64, the N pieces of data are inputted to the buffer. Thereafter, in the counting process of the update function block 68, the data are counted in every interval. Thus, subsequent count results will be acquired in each interval.

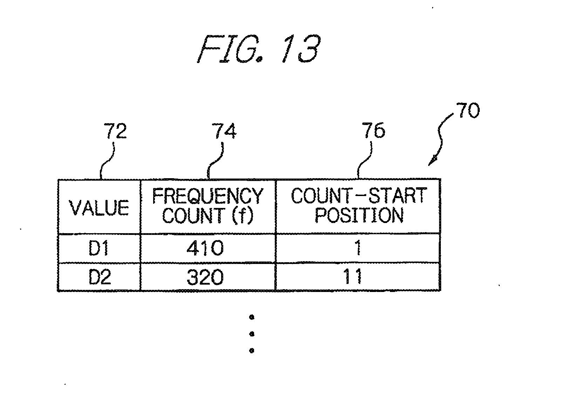

Now, the network analyzer 10 of the instant alternative embodiment will be simply compared with the counting algorithm described in the above-described Manku et al. FIG. 13 shows an example of containing count in a table form in the prior art. As seen from FIG. 12, the stream of data is divided into the plurality of intervals to be counted.

The table 70 shown in FIG. 13 includes a column 72 for "value", a column 74 for "frequency count" as the occurrence frequency, and a column 76 for "count-start position". The value of data appearing in a stream of data is contained in the column 72 for "value". The occurrence frequency of the data in the column 72 for "value" is contained in the column 74 for "frequency count".

In the column 76 for "count-start position", the interval number is stored when the data in the column 72 for "value" first appears in the stream of data. The value in this column also represents the allowable error for counting the data. This is based on setting the number of data in one interval to $(1/\varepsilon)$.

In this example, it is appreciated that the data whose "value = $D1$" first appears in the interval of the "interval number = 1", and is counted 410 times until this moment. Similarly, it is appreciated that the data of which the "value = $D2$" first appears in the interval of the "interval number = 10", and is counted 320 times until this moment.

In this prior art, the data is deleted as the low-frequency data having its occurrence frequency low when the count result of this data satisfies an expression (3):

$$\text{frequency count } f + \text{count-start position}$$
$$\leq \text{current interval number.} \quad \ldots \quad (3)$$

This keeps only the data having its occurrence frequency high which is considered to be important, thus intending to reduce the memory space.

However, in this prior art, since the capacity of the input buffer is set such as to correspond to the N pieces of data, other applications utilizing count results are kept waiting until finishing the counting for the N pieces of data. This is problematic in applications that need to obtain count results on or almost real-time basis.

Thus, in the network analyzer 10 of the instant alternative embodiment, a method is proposed for consecutively updating count results each time having finished the count for the first N pieces of data. Well, the consecutive updating of count results would cause the population parameter of the counts to change. Therefore, the expression (3) based on the population parameter corresponding to the value $N$ could not be applied to the network analyzer 10 without modification. Thus, the network analyzer 10 is proposed which is adapted to frequently update the allowable error range to enable the expression (3) to be applied.

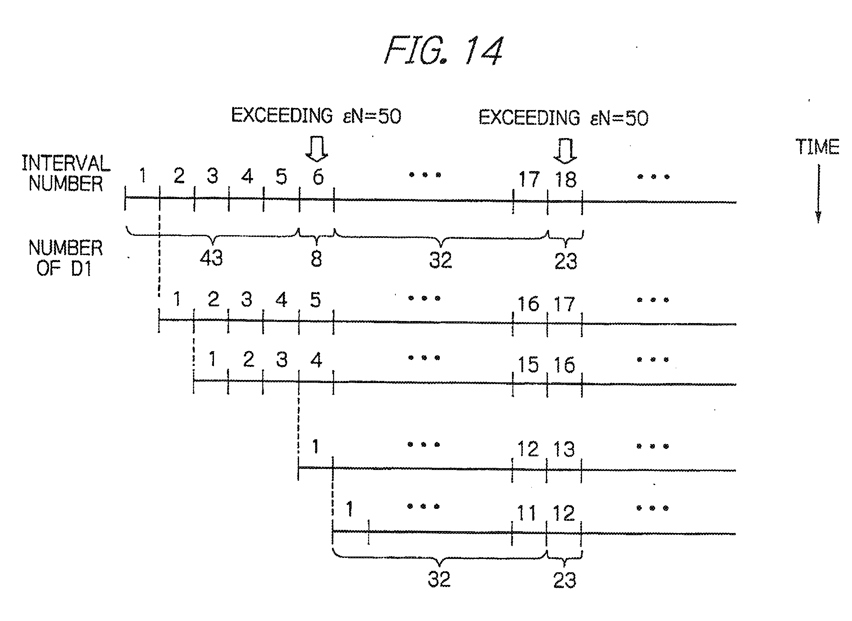

Operation of the instant alternative embodiment will be described. FIG. 14 shows a counting process in the counting function block 64. The counting function block 64, when counting the occurrence frequency of data in the inputted stream of data, stores information when the occurrence frequency exceeds a predetermined threshold value in the sketch memory 36 of the storage 14, together with the occurrence frequency. For example, the predetermined threshold value is set to "$\varepsilon N = 50$". This predetermined threshold value is a criterion for a new allowable error.

The counting function block 64, when counting the occurrence frequency for the data of "value = $D1$", records the current interval number in its storage format in the sketch memory 36 each time the occurrence frequency exceeds the predetermined threshold value of 50.

In this example, at the "interval number = 6", the frequency count $f$ exceeds the value 50. After further progressing the eleven intervals, the frequency count f exceeds 50 again at "interval number = 17". The counting function block 64 stores these interval numbers in the sketch memory 36 in order to specify these interval numbers later.

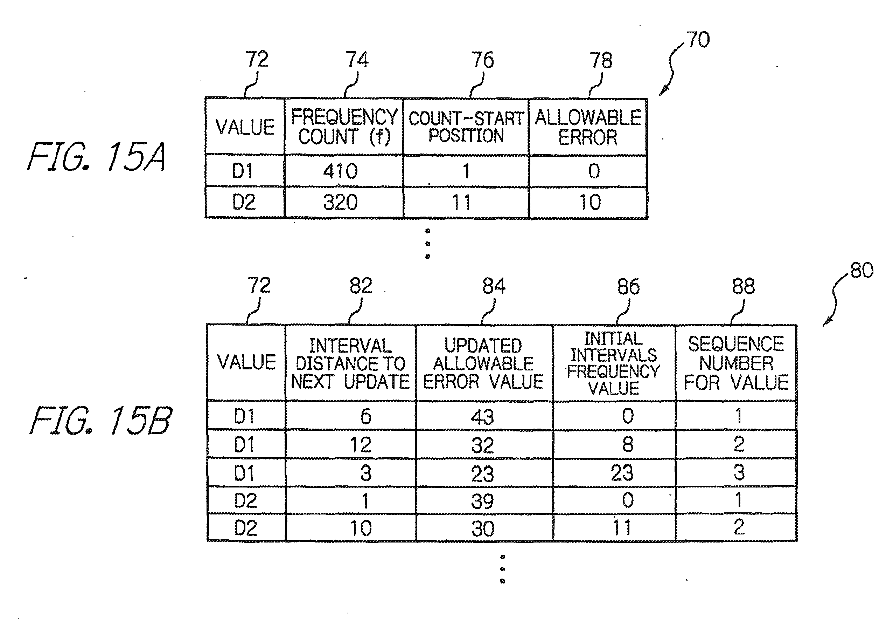

Next, reference will be made to FIGS. 15A and 15B to describe a storing process into the sketch memory 36. The sketch memory 36, as shown in FIG. 15A, includes a count result table 70. The count result table 70 contains resultant counts for a stream of data. In addition to the items of the count result table 70 shown in FIG. 13, a column 78 for "allowable error" is newly provided. In the prior art, the allowable error is constant with the progress of counting. However, in the present alternative embodiment, the allowable error may change consecutively as described below. In the alternative embodiment, in order to consecutively follow such a change, the column 78 for "allowable error" is provided.

The value in the first line of the column 78 for "allowable error" is zero. The reason for this is that, until performing the steps described below, the allowable error does not change, but is equal to the value in its initial state, i.e. in the start position for the statistical calculation.

The sketch memory 36, as shown in FIG. 15B, also includes a threshold value position table 80. The threshold value position table 80 is prepared to consecutively store a position, shown in FIG. 14, when a resultant count exceeds the predetermined threshold value, which is equal to 50 in the example. The threshold value position table 80 includes the column 72 for "value", a column 82 for "interval distance to next update", a column 84 for "updated allowable error value", a column 86 for "initial intervals frequency value", and a column 88 for "sequence number for value".

The value of data appearing in a stream of data is contained in the column 72 for "value". The column 82 for "interval distance to next update" contains the number of intervals between the previous and next timings where the resultant count exceeds the predetermined threshold value (50). The column 84 for "updated allowable error value" contains the resultant count of the intervals from the previous timing right before the next timing where the resultant count exceeds the predetermined threshold value (50).

Meanwhile, in the first interval, i.e. the interval #1, or when the value is contained in each column of the threshold value position table 80 in response to exceeding the predetermined threshold value and then the resultant count exceeds the predetermined threshold value in the same interval, the column 82 for "interval distance to next update" contains zero, and the column 84 for "updated allowable error value" contains the resultant count until the current interval.

The column 86 for "initial intervals frequency value" contains the frequency count $f$ of the data in only the interval where the resultant count has exceeded the predetermined threshold value (50). The column 88 for "sequence number for value" contains a sequence number, which is newly given each time the resultant count exceeds the predetermined threshold value (50) in order to specify the record order for the data having the same value in the column 72 for "value" for the purpose of convenience.

About the data in the first and second lines in FIG. 15B, operation will be described on the basis of the value in the example shown in FIG. 13. In this example, since the resultant count first exceeds the predetermined threshold value (50) in the sixth interval after starting the count from the first interval, the first line is set to "interval distance to next update = 6". The "updated allowable error value" is set to "updated allowable error value = 43" since the total count result until the previous interval is equal to 43. The "initial interval frequency value" is also set to "initial interval frequency value = 0" since the threshold value position table 80 does not contain data related to the value "*D1*".

It is appreciated that the next timing when the resultant count exceeds the value of 50 is further subsequent to the twelve intervals from the second line in the threshold value position table 80. Therefore, the second line is set to "interval distance to next update = 12". The "updated allowable error value" is set to "updated allowable error value = 32" since the resultant count until the previous interval is equal to 32. The "initial intervals frequency value" is set to "initial intervals frequency value = 8" since the occurrence frequency of the value "*D1*" is equal, to eight in only the previous interval where the predetermined threshold value (50) is exceeded, namely, the interval having an interval number = 5. In addition, since the first and second lines are related to the position of the threshold value for the same "value = D1", the value in the column 88 for "sequence number for value" is given by sequentially incrementing the number from one by one.

The "allowable counting error" in the instant alternative embodiment corresponds to the value $\varepsilon N$. The "updated allowable counting error" corresponds to the value in the column 84 for "updated allowable error value" of the threshold value position table 80.

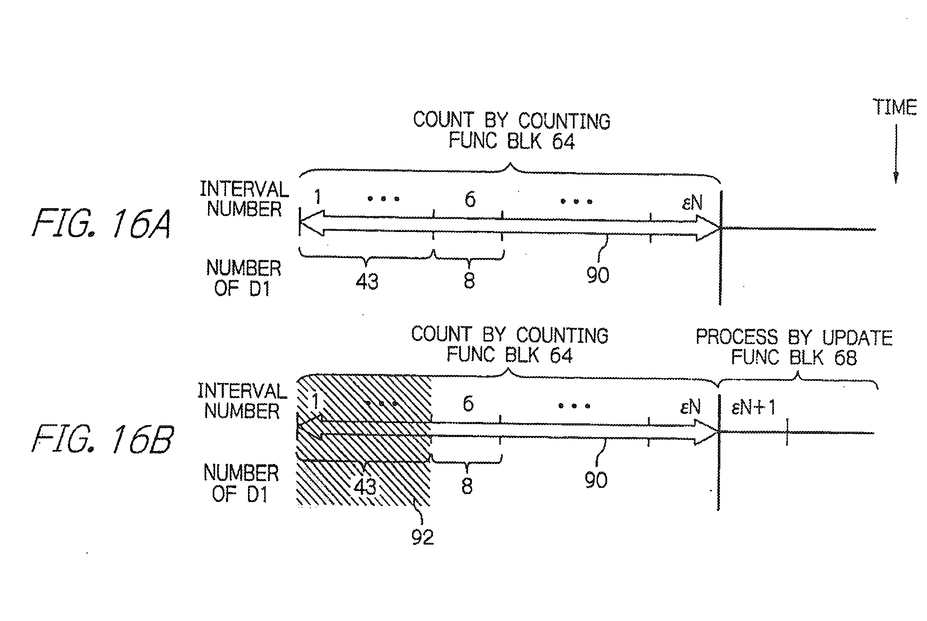

Next, reference will be made to FIGS. 16A to 16D to describe processing steps in the delete function block 62. An arrow 90 indicates a region to be counted in each step.

(1) Counting process for the number $N$ of the data The counting function block 64, as shown in FIG. 16A, individually counts the same data or values in the first $N$ pieces of data or values to store a resultant count in the storage 14. It is assumed that the resultant count in this counting is obtained which is similar to that described with reference to FIGS. 14, 15A and 15B.

(2) Delete process for an initial count

(2.1) The delete function block 62 entirely deletes a count result, for the value *D1* in a shaded region 92 in FIG. 16B, i.e. the intervals 1 to 5.
(2.2) The count result for the value *D1* includes an error, equal to a resultant count, caused by deleting the count, result. Thus, the threshold value position table 80 described with reference to FIG. 15B is used to update the allowable error related to the data or value *D1* with the same value as the resultant count that has been deleted.

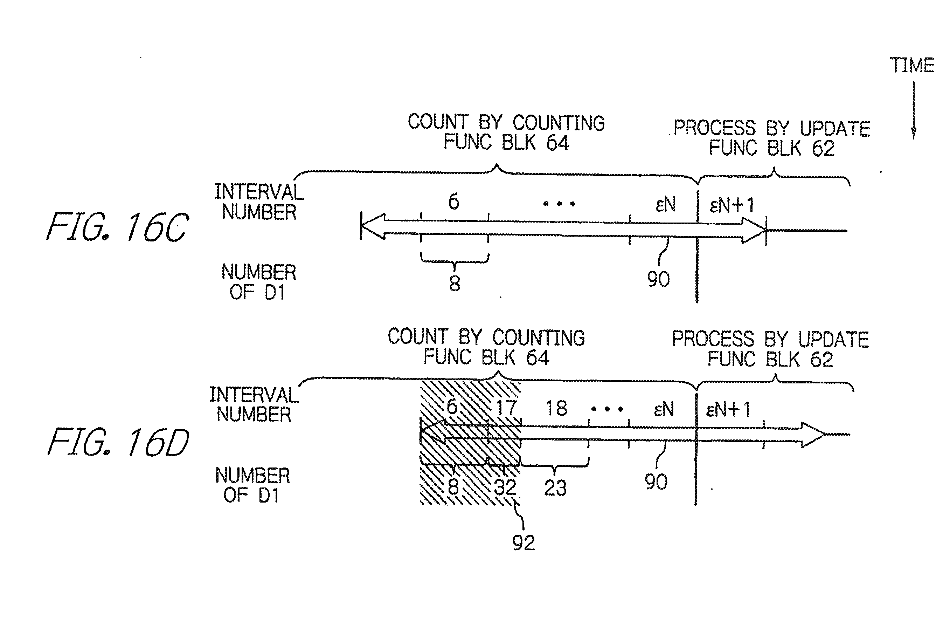

(3) Shifting process for intervals by one interval As shown in FIG. 16C, after the region to be counted 90 is forward shifted by one interval, the update function block 68 counts the data or values. In caste, the data or values in the interval having its "interval number = $\varepsilon N$" are counted. In a similar way thereafter, the update function block 68, while forward shifting the intervals by one interval, sequentially stores the resultant count in the storage 14. Other applications may acquire a count, result that is consecutively stored in each interval.

(4) Delete process for the initial count
Once the left edge of the region to be counted reaches the interval 6 where the resultant count, for the value *D1* exceeds 50, the delete function block 62 performs the following processes.

(4.1) The delete function block 62 entirely deletes the count result for the value *D1* in a shaded region 92 shown in FIG. 16D, i.e. the intervals 6 to 17.
(4.2) The count result for the value *D1* includes an error, equal to the resultant count, caused by deleting the count result. Thus, the threshold value position table 80 described with reference to FIG. 15B is used to update the allowable error related to the data or value *D1* with the same value as the resultant count that has been deleted.

In a similar way thereafter, each time the left edge of the region to be counted reaches the interval where the resultant count for the value *D1* exceeds the value of 50, the delete function block 62 deletes the old count, and updates the value of the allowable error 78 for the value *D1* in the count result table 70 with the value in the first line of the column 86 for "initial intervals frequency value" in the threshold value position table 80.

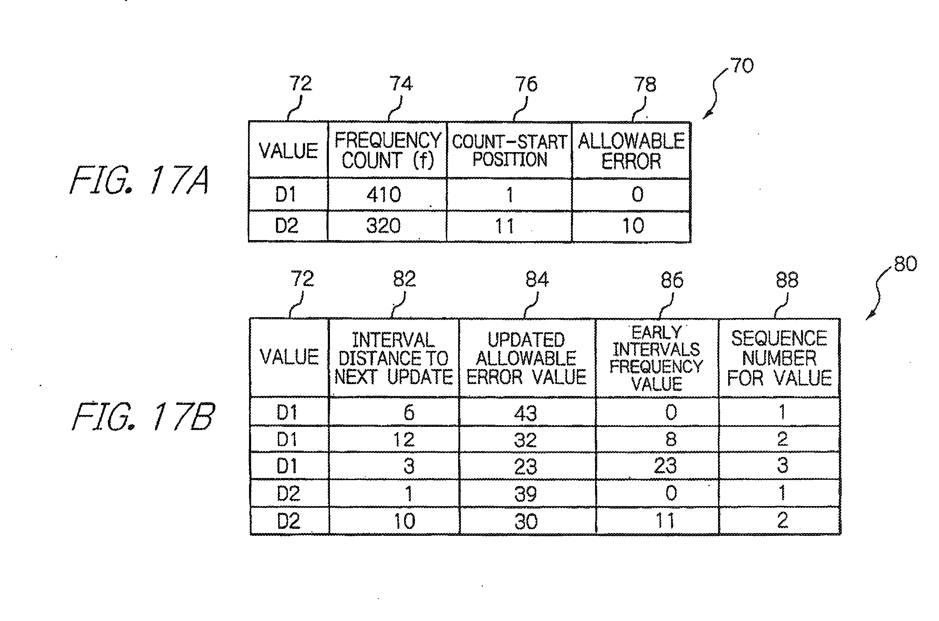

Next, reference will be made to FIGS. 17A to 17D to describe steps for using the values contained in the threshold value position table 80. These values are the same as in FIG. 15B.

FIGS. 17A and 17B show the state before the delete process shown in FIG. 16B. The delete function block 62 checks the value of the column 76 for "count-start position" in the count result table 70 in each boundary of the interval to search for the value 72 equal to "1" as the value of this column. In this cause, since the value *D1* appears from the interval #1, the value of the column 76 for the value *D1* is "1".

Next, the delete function block 62 searches the data in the threshold value position table 80 for "value = *D1*" to further acquire the data having the smallest "sequence number for value". This acquisition condition is satisfied by the data in the first line in FIG. 17B. If such data are not found, the delete function block 62 deletes the count result for "*D1*" from the count result table 70 since it is represented that the resultant count of "value = *D1*" has an allowable error less than "$\varepsilon N$ =50".

Next, the delete function block 62 uses the data in the first line in FIG. 17B to update the data related to the value *D1* in the count result table 70. Specifically, the following processes are performed.

(1) The delete function block 62 subtracts the sum of the values of the column 84 for "updated allowable error value" and the column 86 for "initial intervals frequency value" in the threshold value position table 80 from the value of the column 74 for "frequency count" in the count result table 70. This means the delete of the count result until the interval #6, and corresponds to the process in the step (2) shown in FIG. 16B.

(2) The delete function block 62 updates the value of the column 78 for "allowable error" in the count result table 70 with the value of the column 84 for "updated allowable error value" in the threshold value position table 80. However, if the value of the column 82 for "interval distance to next update" is zero, the value of the column 78 for "allowable error" is updated with zero. This is a compensation process associated with the delete of the count result until the interval #6, and considers the error, caused in the count result, corresponding to the amount of the delete.

(3) The delete function block 62 updates the value of the column 76 for "count-start position" in the count result table 70 with a value calculated by subtracting one from the value of the column 82 for "'interval distance to next update" in the threshold value position table 80 shown in FIG. 17B.

However, if the value of the column 82 for "interval distance to next update" is zero, the value of the column 76 for "count-start position" is left as one not to be updated. This is a process for preparing for the step (4) shown in FIG. 16D. Thereafter, the update function block 68 subtracts one from all the values of the column 76 for "count-start position" in the count result table 70 each time the interval to be counted progresses by one interval, and performs the delete process similar to the above-described steps (1) and (2) for the data such that the value of the column 76 is one, at this moment.

For example, the next delete process for the value D1 is performed when the value of the column 76 for "count-start position" turns to one, in other words, when the five intervals have been passed, i.e. at the timing in the step (4) shown in FIG. 16D.

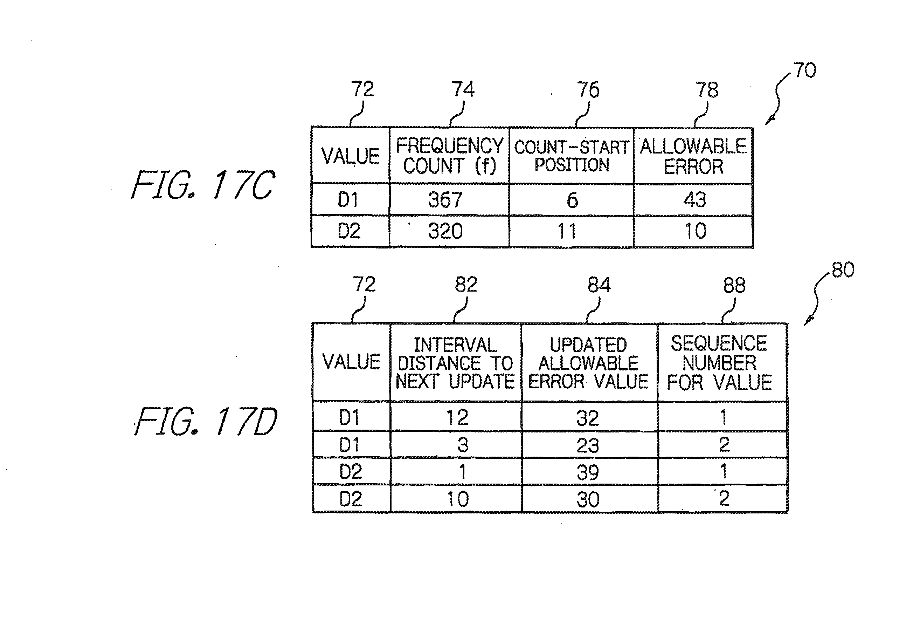

Next, FIGS. 17C and 17D show the state of each table after the delete function block 62 finishes the above-described processes. The count result table 70, as shown in FIG. 17C, has the data in the first line as the old count result deleted. These data in the first line are calculated through the data in the first line of the threshold value position table 80 show in FIG. 17B. The value of the column 78 for "allowable error" is updated with the column 84 for "updated allowable error value" in FIG. 17B. Associated with this update, the threshold value position table 80, FIG. 17B, has the data in the first line deleted as shown in FIG. 17D.

Thereafter, the delete function block 62 repeats the same steps each time reaching the boundary of the interval. Thereby, the count result table 70 has the data of the old count result deleted to hold only the new data, and has the value of the column 73 for "allowable error" updated with the value corresponding to the amount of the deleted data. This can save the memory space, and maintain a certain level of accuracy in counting results.

The delete of the old count result is based on the fact that, the older the data, the less important the data in order to statistically know the current state when counting a stream of data under the circumstances where new data always reach the network analyzer 10.

With respect to the example shown in FIGS. 17A to 17D, the data having the value of the column 76 for "count-start position" equal to one appears in the initial stage of counting. Therefore, the delete of a certain number of these data pieces is considered not to have much effect on statistically knowing the current state of the data.

The network analyzer 10, in addition to performing the delete processes by the delete function block 62 described with reference to FIGS. 16A to 16D and 17A to 17D, deletes the data having its occurrence frequency lower from the count result table 70 through the expression (3) in the low-frequency data delete function block 66, similar to the prior art described in Gurmeet Singh Manku, et al.

These double delete processes can effectively reduce the space of consumed memory. In addition, since the update function block 68 consecutively updates the data, count results can be acquired at a time interval required to update data in one interval.

The operational steps of the network analyzer 10 in the instant alternative embodiment will generally be summarized to read as follows.

(1) The counting function block 64 sets the first N pieces of data in the buffer to count the data, and stores a resultant count in the count result table 70 to consecutively set the value in the threshold value position table 80.

(2) After the counting function block 64 counts the N pieces of data, the delete function block 62 determines whether or not the old data in each boundary of the interval are to be deleted by determining whether or not the value of the column 76 for "count-start position" is equal to unity, and performs the delete process described with reference to FIGS. 16A to 16D.

(3) The low-frequency data delete function block 66 deletes the low-frequency data satisfying the condition of the expression (3) in each interval.

(4) After the counting function block 64 counts the N pieces of data, the update function block 68 stores the resultant count of the additional data in each interval, in the count result table 70 and the threshold value position table 80.

In the instant alternative embodiment, the storage format for the count results is not to be restricted to the table format as shown in FIGS. 15A and 15B, but any storage formats such as a listing format may be used.

As described above, in the network analyzer 10, the counting function block 64 records the interval number when the occurrence frequency exceeds the predetermined threshold value $\varepsilon N = 50$ in the threshold value position table 80, and the delete function block 62, after counting the N pieces of data, references to the threshold value position table 80 in each boundary of the interval to delete the count results obtained in the initial stage under the predetermined condition. This enables the network analyzer 10 to save the memory space for storing count results.

In the network analyzer 10, since count results obtained in the initial stage is not so important in order to statistically know the latest state, a certain level of accuracy in counting results can be maintained even if these delete processes are performed.

In addition, since the delete function block 62 updates the value of the column 78 for "allowable error" in the count result table 70 with the column 84 for "updated allowable error value" in the threshold value position table 80, in other words, a count result immediately before exceeding the allowable error as the predetermined threshold value when deleting the count result obtained in the initial stage, the counting can maintain an error within a certain range and hence its accuracy even if the old count result is deleted.

After the counting function block 64 counts the N pieces of data, the update function block 68 consecutively stores a count result in the count result table 70 each time counting the data in one interval. This enable other applications to acquire count results on or almost real-time basis. The network analyzer 10 does not keep an application consecutively requiring count results waiting until finishing the counting, which can improve the processing speed.

In addition, the low-frequency data delete function block 66 deletes data having its statistical occurrence frequency low from the count results, which can reduce the memory space for storing count results.

Now, a further alternative embodiment will be described in accordance with the present invention. The network analyser 10 has a function to collect communication packets streaming over a telecommunications network, count certain information in the packets such as send/receive addresses, store such results, and make an analysis through a statistical process based on the stored results.

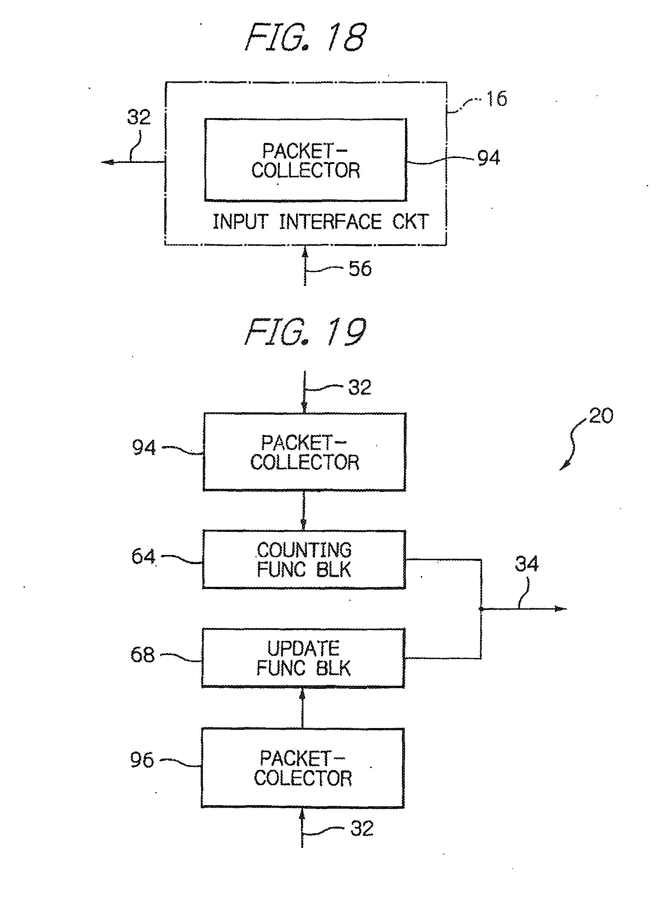

The network analyzer 10, as shown in FIG. 1, includes the input interface circuit 16. The input interface circuit 16 may include a packet collector 94, as shown in FIG. 18. The counting processor 20 of the arithmetic processor 12 may include the packet collector 94 and another packet collector 96, as shown in FIG. 19, which may be connected, to the counting function block 64 and the update function block 68, respectively.

The packet collectors 94 and 96 are connected to a network, and have a function to collect, the communication packets, extract information about objects to be counted such as send/receive addresses, and output the information. The packet collectors 94 and 96 output the extracted send/receive addresses in the packets to the counting function block 64 and the update function block 68, respectively. Particularly, in the counting processor 20, the packet collector 94 collects the first N send/receive addresses, and then the packet collector 96 collects the subsequent send/receive addresses. Since processes after collecting the packets may be similar to the previous embodiments, a repetitive description thereon is omitted.

Since there are many send/receive addresses of communication packets over a telecommunications network, the large memory space is needed in order to count these addresses. Thus, the network analyzer 10 in accordance with the previous embodiments can be applied to effectively count the send/receive addresses using the small memory space.

The above-described embodiments involve the algorithm for counting the same values appearing on streams of data, for example, the same send/receive addresses. However, objects to be counted is not to be restricted to the same data, but values which are "equivalent" may be counted if the values match the purpose of the counting.

For example, in the network analyzer 10 of the previous alternative embodiment, when it is necessary to count send/receiver packets related to the same network address, the counting function block 64 may count the packets by considering the addresses such that the same value is acquired by subnet masking, as the same value.

The entire disclosure of Japanese patent, application Nos. 2008-7359 and 2008-53195 filed on January 16 and March 4, 2008, respectively, including the specification, claims, accompanying drawings and abstract of the disclosure, is incorporated herein by reference in its entirety.

While the present invention has been described with reference to the pars illustrative embodiments, it is not to be restricted by the embodiments. It is to be appreciated that those skilled in the art can change or modify the embodiments without departing from the scope and spirit of the present invention.

According to an embodiment a network analyzer (10), a storage (14) stores a set of occurrence frequencies in entire, first and final intervals. An arithmetic processor (12) counts the value while deleting the frequency information based on the stored frequency information. The arithmetic processor (12) determines whether to estimate the occurrence frequency in the interval next to the first interval for the stored frequency information after counting for a predetermined number of data sets or counting the value in each interval. When the determination is true, the difference in occurrence frequency in the first interval and the estimated occurrence frequency are stored as the occurrence frequency in a number, corresponding to the predetermined number - 1, of the intervals shifted by one interval. The occurrence frequency in the next interval is estimated based on the set to store the estimated occurrence frequency in the storage as the occurrence frequency of the first interval in the next data sets.

According to one embodiment there is provided a statistical processing method for setting the number of allowable errors represented by the reciprocal of an allowable error rate to be set for a predetermined number of supplied data sets as the number of intervals for delimiting the data, counting an occurrence frequency for a value of each data in one interval, deleting frequency information for the occurrence frequency lower than a predetermined occurrence frequency each time acquiring the frequency information based on the counting, and acquiring the frequency information for the data through a statistical process, CHARACTERIZED IN THAT said method comprises:

a first step of determining whether to require to estimate the occurrence frequency in the interval next to the first interval in the divided data set for each value of the frequency information stored in storage means (14) after counting for the data set and after counting the value in each interval; and

a second step of storing the occurrence frequency calculated by subtracting the occurrence frequency in the first interval from the acquired occurrence frequency for the data set in the storage means (14) as the occurrence frequency through a counting process in the data of the number, corresponding to the predetermined number minus one, of the intervals shifted by one interval based on the occurrence frequency in the first interval, the occurrence frequency in the final interval in the divided data set, and the occurrence frequency in the data sets stored in the storage means (14) as the frequency information where a determination in the first step is true, and estimating the occurrence frequency in the next interval to store the estimated occurrence frequency in the storage means (14) as the occurrence frequency of the first interval in the next data set shifted by one interval.

According to one embodiment there is provided the occurrence frequencies in the first and final intervals are connected to each other to estimate the occurrence frequency in the next interval based on the expression of a quadratic curve representing the area formed by the occurrence frequencies in the first and final intervals.

According to one embodiment said method further comprises a third step of estimating the rate of change in occurrence frequency of each value based on the occurrence frequencies in the first, final and entire intervals.

According to one embodiment said third step connects the occurrence frequencies in the first and final intervals to estimate a differential value in the final interval calculated through an expression acquired by differentiating a quadratic curve representing the area formed by the occurrence frequencies in the first and final intervals as the rate of change in occurrence frequency.

According to one embodiment the storage means (14) is searched for the frequency information having the occurrence rate equal to or higher than the predetermined occurrence rate to extract the frequency information after the counting for the data set and after counting the value in each interval.

According to one embodiment said second step includes:

a fourth step of grouping the data having the same value in the stream of data to count the occurrence of the data;
a fifth step of deleting the entire or partial count result in an initial stage where the number of the streams of data inputted into a storage area of the storage means (14) attains to the maximum size of the storage area;
a sixth step of deleting the group where the counted occurrence frequency is lower than the predetermined occurrence frequency as a threshold value; and
a seventh step of additionally receiving the number of the data in the stream of data corresponding to one of the intervals to update the count result,

said first step storing a set of the count result and the number of allowable errors in each group in the storage means (14),

said second step updating the number of allowable errors in the group where the count result is deleted with the count result of the group before the delete, thereby keeping the counting errors before and after the delete within a range of the number of allowable errors.

According to one embodiment said fourth step stores the count result until the interval before by one interval the interval where the count result of the occurrence frequency exceeds the number of allowable errors as an updated value of the number of allowable errors in each group into the storage means (14),

said fifth step updating the number of allowable errors in the group where the count result is deleted with the updated value of the number of allowable errors.

According to one embodiment said fifth step, when updating the number of allowable errors in the group where the count result is deleted with the updated value of the number of allowable errors, subtracts the updated value of the number of allowable errors from the count result of the occurrence frequency in the group.

According to one embodiment said fifth, sixth and seventh steps are repeated until the end of the stream of data, said fourth step storing the number of the interval where the count result of the occurrence frequency exceeds the number of allowable errors into the storage means (14),

said fifth step storing a set of the number of the interval stored into the storage means (14) in said first step and the count result in the group into the storage means (14), in the update of the number of allowable errors in the group where the count result is deleted, with the updated value of the number of allowable errors.

According to one embodiment one is subtracted from the number of the interval stored into the storage means (14) in said fifth step after each update in said seventh step, and then said fifth step is performed only where the number of the interval is one.

According to one embodiment said sixth step acquires the sum of the count result and the number of allowable errors in the individual groups to delete the count result of the group where the acquired sum is equal to or less than the number of the intervals.

According to one embodiment said method is performed by a computer.

According to embodiments of the invention the features of the different claims may also be combined. For example, the apparatus of claim 1 may have the additional features of one or more of the following apparatus claims 2 to 13, the apparatus of claim 2 may have additionally the features of one of the following apparatus claims 3 to 13, and so on. In other worlds, an embodiment of the invention may be defined by a combination of the features of different claims.

**Claims**

1. A statistical processing apparatus (10) for setting the number of allowable errors represented by the reciprocal of an allowable error rate to be set for a predetermined number of supplied data sets as the number of intervals for delimiting the data, counting an occurrence frequency for a value of each data piece in one interval, deleting frequency information for the occurrence frequency lower than a predetermined occurrence frequency each time acquiring the frequency information based on the counting, and acquiring the frequency information for the data through a statistical process,

   **CHARACTERIZED IN THAT**
   said analyzer (10) comprises:

   storage means (14) for storing the occurrence frequencies in entire intervals as all of the intervals, and first one and final one of the entire intervals as a set of the occurrence frequencies, and
   arithmetic processing means (12) for counting the occurrence frequency of the value while deleting the frequency information matching a comparison of the stored frequency information;
   said arithmetic processing means (12) determining whether to estimate the occurrence frequency of the value in the interval next to the first interval for the value of the frequency information stored in said storage means (14) after counting the predetermined number of data sets or after counting the value of the data set in each interval
   said arithmetic processing means (12) being in response to the true determination to store in said storage means (14) a value calculated by subtracting the occurrence frequency in the first interval from the estimated occurrence frequency as the occurrence frequency in the data sets of a number, corresponding to the predetermined number minus one, of the intervals shifted by one interval,
   said arithmetic processing means (12) estimating the occurrence frequency in the interval next to the first interval based on the set of occurrence frequencies to store the estimated occurrence frequency in said storage means (14) as the occurrence frequency of the first interval in the predetermined number of the next data sets shifted by one interval.

2. The apparatus (10) in accordance with claim 1,
FURTHER **CHARACTERIZED BY**
said storage means (14) storing the occurrence frequencies in first one and final one of the intervals delimited for the data sets, the occurrence frequency for counting the occurrence of each value of the data, and an error estimating value representing a count starting interval of the occurrence frequency for counting the occurrence of each value of the data as a set of frequency information related to counting;
said arithmetic processing means (12) searching said storage means (14) storing the frequency information of the value in the data having an occurrence rate equal to or higher than a predetermined occurrence rate in the cycle period, processing the frequency information in said storage means (14) through addition, delete and modification, setting, after processing the first data set, the data set shifted by one interval as a next cycle each time processing the data for one interval, and performing the addition, delete and modification for the frequency information of the value so as to search for and acquire the frequency information of the value in the data having the occurrence rate equal to or higher than the predetermined occurrence rate for the data set of the next cycle;
said arithmetic processing means (12) including acquisition processor means for acquiring the value of the data included in the stream of data;
counting processing means (20) for newly adding the frequency information for the acquired value in response to the absence of the value for the supplied data, and adding the occurrence frequency of the frequency information for the acquired value in response to the presence of the value to update the occurrence frequency;
in-interval process number determining means (22) for counting the number of processes for the data from the first data in each interval to store the count in said storage means (14), and to determine whether to reach an interval boundary based on the stored number of the processed data in the interval;
process number determining means (24) for counting the number of the processes for the data from the start of the processes to determine whether or not the number of data sets less than the predetermined number has been processed on the basis of the number of the processed data stored in said storage means (14);
count determination processing means (26) for deleting the frequency information having the occurrence frequency lower than the predetermined occurrence frequency in the data for the number of the processed intervals based on the occurrence frequency of the value and the error estimating value in the data set after processing the data acquired in one interval; and
frequency arithmetic processing means (28) for adjusting the occurrence frequency by said counting processing means (20) based on the error estimating value of each value for the data set in the first cycle stored in said storage means (14), associated with the end of process of said counting processing means (20) and said count determination processing means (26), determining whether to estimate the occurrence frequency of the value in the interval next to the first interval, storing, in response to the true determination, a value calculated by subtracting the occurrence frequency in the first interval from the estimated occurrence frequency in said storage means (14) as the occurrence frequency in the data sets for the number, corresponding to the predetermined number minus one, of intervals shifted by one interval, and estimating the occurrence frequency in the interval next to the first interval based on one set of the occurrence frequencies to store the estimated occurrence frequency in said storage means (14) as the occurrence frequency of the first interval in the next data sets for the predetermined number of intervals shifted by one interval;
said arithmetic processing means (12) consecutively processing the inputted data treated as data inputted from the first data of the final interval in the next cycle.

3. The apparatus (10) in accordance with claim 2, **CHARACTERIZED IN THAT** said frequency arithmetic processing means (28) decrements the error estimating value by one in response to the false determination for estimating the occurrence frequency in the next interval.

4. The apparatus (10) in accordance with claim 2 or 3 , **CHARACTERIZED IN THAT** said arithmetic processing means (12) connects the occurrence frequencies in the first and final intervals to estimate the occurrence frequency in the next interval based on the expression of a quadratic curve representing the area formed by the occurrence frequencies in the first and final intervals.

5. The apparatus (10) in accordance with one of claims 2 to 4, **CHARACTERIZED IN THAT** said arithmetic processing means (12) estimates the rate of change in occurrence frequency of each value based on the occurrence frequencies in the first, final and entire intervals.

6. The apparatus (10) in accordance with one of claims 2 to 5, **CHARACTERIZED IN THAT** said arithmetic processing means (12) connects the occurrence frequencies in the first and final intervals to estimate a differential value in the final interval calculated through an expression acquired by differentiating a quadratic curve representing the area formed by the occurrence frequencies in the first and final intervals as the rate of change in occurrence frequency.

7. The apparatus (10) in accordance with one of claims 2 to 6, **CHARACTERIZED IN THAT** said arithmetic processing means (12) further includes extraction processor means for searching said storage means (14) for the frequency information having the occurrence rate equal to or higher than the predetermined occurrence rate to extract the frequency information after counting the predetermined number of the data sets and after counting the value of the data set in each interval.

8. The apparatus (10) in accordance with one of claims 2 to 7,
   **CHARACTERIZED IN THAT**
   said acquisition processing means (18) includes:

   data acquisition means (60) for acquiring the value of the data included in the stream of data; and
   delete means (62) for deleting the entire or partial count result in an initial stage in response to attainment of the number of the streams of data inputted into a storage area of said storage (14) to the maximum size of said storage area,
   said counting processing means (20) including:

   counting means (64) for grouping the same value in the stream of data to count the occurrence frequency of the value in each group while entering the stream of data into said storage area;
   low-frequency data delete means (66) for deleting the frequency information having the occurrence frequency lower than the predetermined occurrence frequency in the individual groups; and
   update means (68) for additionally receiving the number of the streams of data corresponding to one of the interval to update the count result,
   said delete means (62) updating an allowable counting error in the group where the count result is deleted with the count result of the group before the delete, thereby keeping the counting errors before and after the delete within a range of the allowable counting error,
   said counting means (64) storing a set of the count result and the number of allowable errors in the group in said storage (14).

9. The apparatus (10) in accordance with one of claims 2 to 8, **CHARACTERIZED IN THAT** said counting means (64) stores the count result until the interval before by one interval the interval where the occurrence frequency exceeds the number of allowable errors as an updated value of the number of allowable errors in each group into said storage means (14),
   said delete means (62) updating the number of allowable errors in the group where the count result is deleted with the updated value of the number of allowable errors.

10. The apparatus (10) in accordance with one of claims 2 to 9, **CHARACTERIZED IN THAT** said delete means (62), in the group where the count result is deleted, subtracts the updated value of the number of allowable errors from the count result of the occurrence frequency in the update of the number of allowable errors with the updated value.

11. The apparatus (10) in accordance with one of claims 2 to 10, **CHARACTERIZED IN THAT** said apparatus repeats processes of said delete means (62), said low-frequency data delete means (66) and said update means (68) until the end of the stream of data,
    said counting means (64) storing the number of the interval where the count result of the occurrence frequency exceeds the number of allowable errors into said storage means (14),
    said delete means (62) storing a set of the number of the interval stored in said storage means (14) and the count result in the group into said storage (14), in the update of the number of allowable errors, in the group where the count result is deleted, with the updated value of the number of allowable errors.

12. The apparatus (10) in accordance with one of claims 2 to 11, **CHARACTERIZED IN THAT** said update means (68) subtracts one from the number of the interval stored into said storage means (14) by said delete means (62) in each process of said update means (68),
    said delete means (62) performing a process thereof only where the number of the interval is one.

**13.** The apparatus (10) in accordance with one of claims 2 to 12, **CHARACTERIZED IN THAT** said low-frequency data delete means (66) acquires the sum of the count result and the number of allowable errors in the individual groups to delete the count result of the group where the acquired sum is equal to or less than the number of the intervals.

**14.** A statistical processing method for setting the number of allowable errors represented by the reciprocal of an allowable error rate to be set for a predetermined number of supplied data sets as the number of intervals for delimiting the data, counting an occurrence frequency for a value of each data in one interval, deleting frequency information for the occurrence frequency lower than a predetermined occurrence frequency each time acquiring the frequency information based on the counting, and acquiring the frequency information for the data through a statistical process,

**CHARACTERIZED IN THAT**
said method comprises:

a first step of determining whether to require to estimate the occurrence frequency in the interval next to the first interval in the divided data set for each value of the frequency information stored in storage means (14) after counting for the data set and after counting the value in each interval; and
a second step of storing the occurrence frequency calculated by subtracting the occurrence frequency in the first interval from the acquired occurrence frequency for the data set in the storage means (14) as the occurrence frequency through a counting process in the data of the number, corresponding to the predetermined number minus one, of the intervals shifted by one interval based on the occurrence frequency in the first interval, the occurrence frequency in the final interval in the divided data set, and the occurrence frequency in the data sets stored in the storage means (14) as the frequency information where a determination in the first step is true, and estimating the occurrence frequency in the next interval to store the estimated occurrence frequency in the storage means (14) as the occurrence frequency of the first interval in the next data set shifted by one interval.

**15.** The method in accordance with claim 14, **CHARACTERIZED IN THAT** said second step includes :

a fourth step of grouping the data having the same value in the stream of data to count the occurrence of the data;
a fifth step of deleting the entire or partial count result in an initial stage where the number of the streams of data inputted into a storage area of the storage means (14) attains to the maximum size of the storage area;
a sixth step of deleting the group where the counted occurrence frequency is lower than the predetermined occurrence frequency as a threshold value; and
a seventh step of additionally receiving the number of the data in the stream of data corresponding to one of the intervals to update the count result,
said first step storing a set of the count result and the number of allowable errors in each group in the storage means (14),
said second step updating the number of allowable errors in the group where the count result is deleted with the count result of the group before the delete, thereby keeping the counting errors before and after the delete within a range of the number of allowable errors.

**16.** The method in accordance with claim 14 or 15, **CHARACTERIZED IN THAT** it further comprises the operation or operations as carried out by the feature or features additionally defined in one of claims 3 to 13.

**Patentansprüche**

**1.** Vorrichtung zur statistischen Verarbeitung (10) zum Einstellen der Anzahl von erlaubten Fehlern, welche durch den Kehrwert einer erlaubten Fehlerrate dargestellt ist, die für eine vorbestimmte Anzahl von zugeführten Datensätzen als die Anzahl von Intervallen zum Abgrenzen der Daten einzustellen ist, Zählen einer Auftrittsfrequenz für einen Wert von jedem Datenstück in einem Intervall, Löschen von Frequenzinformation für die Auftrittsfrequenz, die niedriger als eine vorbestimmte Auftrittsfrequenz ist, jedes Mal, wenn die Frequenzinformation basierend auf dem Zählen gewonnen wird, und Gewinnen der Frequenzinformation für die Daten durch ein statisches Verfahren,
**dadurch gekennzeichnet, dass**
der Analysator (10) umfasst:

Speichermittel (14) zum Speichern der Auftrittsfrequenzen in Gesamtintervallen als alle von den Intervallen und einem Ersten und einem Letzten von den Gesamtintervallen als einen Satz der Auftrittsfrequenzen, und
Mittel zur arithmetischen Verarbeitung (12) zum Zählen der Auftrittsfrequenz des Wertes während des Löschens der Frequenzinformation, die bei einem Vergleich mit gespeicherter Frequenzinformation übereinstimmt; wobei das Mittel zur arithmetischen Verarbeitung (12) bestimmt, ob die Auftrittsfrequenz des Wertes in dem auf das erste Intervall folgende Intervall für den Wert der Frequenzinformation, welche in dem Speichermittel (14) gespeichert ist, nach dem Zählen der vorbestimmten Anzahl von Datensätzen oder nach dem Zählen des Wertes des Datensatzes in jedem Intervall zu schätzen ist;

wobei das Mittel zur arithmetischen Verarbeitung (12) als Antwort auf die Wahr-Bestimmung derart reagiert, dass es in dem Speichermittel (14) einen Wert, der durch Subtrahieren der Auftrittsfrequenz in dem ersten Intervall von der geschätzten Auftrittsfrequenz berechnet wird, als die Auftrittsfrequenz in den Datensätzen einer Anzahl, die der vorbestimmten Anzahl minus Eins entspricht, der Intervalle speichert, die um ein Intervall verschoben sind,

wobei das Mittel zur arithmetischen Verarbeitung (12) die Auftrittsfrequenz in dem auf das erste Intervall folgende Intervall basierend auf dem Satz von Auftrittsfrequenzen schätzt, um die geschätzte Auftrittsfrequenz in dem Speichermittel (14) als die Auftrittsfrequenz des ersten Intervalls in der vorbestimmten Anzahl von nächsten Datensätzen zu speichern, die um ein Intervall verschoben sind.

2. Vorrichtung (10) nach Anspruch 1, ferner **dadurch gekennzeichnet, dass** das Speichermittel (14) die Auftrittsfrequenzen im ersten und letzten der abgegrenzten Intervalle für die Datensätze, die Auftrittsfrequenz zum Zählen des Auftretens von jedem Wert der Daten und einen Fehlerschätzwert, der ein Zählstartintervall der Auftrittsfrequenz zum Zählen des Auftretens von jedem Wert der Daten darstellt, als einen Satz von Frequenzinformation, die sich auf das Zählen bezieht, speichert;

das Mittel zur arithmetischen Verarbeitung (12) das Speichermittel (14) durchsucht, welches die Frequenzinformation des Wertes in den Daten speichert, die eine Auftrittsrate aufweisen, die gleich oder höher als eine vorbestimmte Auftrittsrate in der Zyklusperiode ist, die Frequenzinformation in dem Speichermittel (14) durch Addition, Löschung und Modifikation verarbeitet, nach dem Verarbeiten des ersten Datensatzes den um ein Intervall verschobenen Datensatz als einen nächsten Zyklus jedes Mal einstellt, wenn die Daten für ein Intervall verarbeitet sind, und die Addition, Löschung und Modifikation für die Frequenzinformation des Wertes durchführt, um die Frequenzinformation des Wertes in den Daten, welche die Auftrittsrate aufweisen, die gleich oder höher als die vorbestimmte Auftrittsrate für den Datensatz des nächsten Zyklus ist, zu suchen und zu gewinnen;

das Mittel zur arithmetischen Verarbeitung (12) Gewinnungsprozessormittel zum Gewinnen des Wertes der in dem Datenstrom enthaltenen Daten enthält;

Mittel zur Zählverarbeitung (20) zum neuerlichen Addieren der Frequenzinformation für den gewonnenen Wert als Antwort auf die Abwesenheit des Wertes für die zugeführten Daten und Addieren der Auftrittsfrequenz von der Frequenzinformation für den gewonnenen Wert als Antwort auf das Vorhandensein des Wertes, um die Auftrittsfrequenz zu aktualisieren;

Mittel zur Bestimmung der Anzahl von Vorgängen im Intervall (22) zum Zählen der Anzahl von Vorgängen für die Daten von den ersten Daten in jedem Intervall, um den Zählwert in dem Speichermittel (14) zu speichern und basierend auf der gespeicherten Anzahl von verarbeiteten Daten in dem Intervall zu bestimmen, ob eine Intervallgrenze erreicht ist;

Mittel zur Bestimmung der Anzahl von Vorgängen (24) zum Zählen der Anzahl von Vorgängen für die Daten vom Beginn der Vorgänge, um auf der Basis der Anzahl von verarbeiteten Daten, die in dem Speichermittel (14) gespeichert sind, zu bestimmen, ob die Anzahl von Datensätzen, die niedriger als die vorbestimmte Anzahl ist, verarbeitet wurde oder nicht;

Mittel zur Zählbestimmungsverarbeitung (26) zum Löschen der Frequenzinformation, welche die Auftrittsfrequenz aufweist, die niedriger als die vorbestimmte Auftrittsfrequenz ist, in den Daten für die Anzahl von den verarbeiteten Intervallen basierend auf der Auftrittsfrequenz des Wertes und des Fehlerschätzwertes in dem Datensatz nach dem Verarbeiten der in einem Intervall gewonnenen Daten; und

Mittel zur arithmetischen Frequenzverarbeitung (28) zum Einstellen der Auftrittsfrequenz durch das Mittel zur Zählverarbeitung (20) basierend auf dem Fehlerschätzwert von jedem Wert für den Datensatz in dem ersten Zyklus, der in dem Speichermittel (14) gespeichert ist, die mit dem Ende des Vorgangs des Mittels zur Zählverarbeitung (20) und des Mittels zur Zählbestimmungsverarbeitung (26) zugeordnet ist, Bestimmen, ob die Auftrittsfrequenz des Wertes in dem auf das erste Intervall folgende Intervall zu schätzen ist, Speichern eines Wertes als Antwort auf die Wahr-Bestimmung, der durch Subtrahieren der Auftrittsfrequenz in dem ersten Intervall von der geschätzten Auftrittsfrequenz in dem Speichermittel (14) berechnet ist, als die Auftrittsfrequenz in den Datensätzen für die Anzahl, welche der vorbestimmten Anzahl minus Eins entspricht, von Intervallen, die um ein Intervall verschoben sind, und Schätzen der Auftrittsfrequenz in dem auf das erste Intervall folgende Intervall basierend auf einem Satz von Auftrittsfrequenzen, um die geschätzte Auftrittsfrequenz in dem Speichermittel (14) als die Auftrittsfrequenz des ersten Intervalls in den nächsten Datensätzen für die vorbestimmte Anzahl von Intervallen, die um ein Intervall verschoben sind, zu speichern;

das Mittel zur arithmetischen Verarbeitung (12) die eingegebenen Daten, die als Daten in dem nächsten Zyklus behandelt werden, die von den ersten Daten des letzten Intervalls eingegeben sind, nacheinander verarbeitet.

3. Vorrichtung (10) nach Anspruch 2, **dadurch gekennzeichnet, dass** das Mittel zur arithmetischen Frequenzverarbeitung (28) den Fehlerschätzwert als Antwort auf die Falsch-Bestimmung zum Schätzen der Auftrittsfrequenz in dem nächsten Intervall um Eins vermindert.

4. Vorrichtung (10) nach Anspruch 2 oder 3, **dadurch gekennzeichnet, dass** das Mittel zur arithmetischen Verarbeitung (12) die Auftrittsfrequenzen in dem ersten Intervall und dem letzten Intervall verbindet, um die Auftrittsfrequenz in dem nächsten Intervall basierend auf dem Ausdruck einer quadratischen Kurve, welche die Fläche darstellt, die durch Auftrittsfrequenzen in dem ersten Intervall und dem letzten Intervall gebildet wird, zu schätzen.

5. Vorrichtung (10) nach einem der Ansprüche 2 bis 4, **dadurch gekennzeichnet, dass** das Mittel zur arithmetischen Verarbeitung (12) die Änderungsrate der Auftrittsfrequenz von jedem Wert basierend auf den Auftrittsfrequenzen in dem ersten, dem letzten und den Gesamtintervallen schätzt.

6. Vorrichtung (10) nach einem der Ansprüche 2 bis 5, **dadurch gekennzeichnet, dass** das Mittel zur arithmetischen Verarbeitung (12) die Auftrittsfrequenzen in dem ersten Intervall und dem letzten Intervall verbindet, um einen Differentialwert in dem letzten Intervall, welcher durch einen Ausdruck berechnet wird, der durch Differenzieren einer quadratischen Kurve gewonnen ist, welche die Fläche darstellt, die durch die Auftrittsfrequenzen in dem ersten Intervall und dem letzten Intervall gebildet wird, als die Änderungsrate der Auftrittsfrequenz zu schätzen.

7. Vorrichtung (10) nach einem der Ansprüche 2 bis 6, **dadurch gekennzeichnet, dass** das Mittel zur arithmetischen Verarbeitung (12) ferner Extrahierungsprozessormittel zum Durchsuchen des Speichermittels (12) nach der Frequenzinformation enthält, welche die Auftrittsrate aufweist, die gleich oder höher als die vorbestimmte Auftrittsrate ist, um die Frequenzinformation nach dem Zählen der vorbestimmten Anzahl von Datensätzen oder nach dem Zählen des Wertes des Datensatzes in jedem Intervall zu extrahieren.

8. Vorrichtung (10) nach einem der Ansprüche 2 bis 7, **dadurch gekennzeichnet, dass** das Gewinnungsverarbeitungsmittel (18) enthält:

Datengewinnungsmittel (60) zum Gewinnen des Wertes der Daten, die in dem Datenstrom enthalten sind; und Löschungsmittel (62) zum Löschen des gesamten oder teilweisen Zählergebnisses in einer Anfangsphase als Antwort darauf, dass die Anzahl von Datenströmen, welche in einen Speicherbereich des Speichers (14) eingegeben sind, die maximale Größe des Speicherbereiches erreicht,
wobei das Mittel zur Zählverarbeitung (20) enthält:

Zählmittel (64) zum Gruppieren des gleichen Wertes in dem Datenstrom, um die Auftrittsfrequenz des Wertes in jeder Gruppe zu zählen, während der Datenstrom in den Speicherbereich eingeht;
Löschungsmittel für Daten mit niedriger Frequenz (66) zum Löschen der Frequenzinformation, welche die Auftrittsfrequenz aufweist, die niedriger als die vorbestimmte Auftrittsfrequenz in den einzelnen Gruppen ist; und
Aktualisierungsmittel (68) zum zusätzlichen Empfangen der Anzahl von Datenströmen, die einem der Intervalle entsprechen, um das Zählergebnis zu aktualisieren,
wobei das Löschungsmittel (62) einen erlaubten Zählfehler in der Gruppe, in der das Zählergebnis gelöscht ist, mit dem Zählergebnis der Gruppe vor dem Löschen aktualisiert, wobei die Zählfehler vor und nach dem Löschen innerhalb einer Spanne von erlaubten Zählfehlern beibehalten ist,
wobei das Zählmittel (64) einen Satz des Zählergebnisses und die Anzahl von erlaubten Fehlern in der Gruppe in dem Speicher (14) speichert.

9. Vorrichtung (10) nach einem der Ansprüche 2 bis 8, **dadurch gekennzeichnet, dass** das Zählmittel (64) das Zählergebnis bis zu dem Intervall vor einem Intervall, in welchem die Auftrittsfrequenz die Anzahl von erlaubten Fehlern übersteigt, als einen aktualisierten Wert der Anzahl von erlaubten Fehlern in jeder Gruppe in dem Speichermittel (14) speichert,
das Löschungsmittel (62) die Anzahl von erlaubten Fehlern in der Gruppe, in welcher das Zählergebnis gelöscht ist, mit dem aktualisierten Wert der Anzahl von erlaubten Fehlern aktualisiert.

10. Vorrichtung (10) nach einem der Ansprüche 2 bis 9, **dadurch gekennzeichnet, dass** das Löschungsmittel (62) in der Gruppe, in welcher das Zählergebnis gelöscht ist, den aktualisierten Wert der Anzahl von erlaubten Fehlern von dem Zählergebnis der Auftrittsfrequenz beim Aktualisieren der Anzahl von erlaubten Fehlern mit dem aktualisierten Wert subtrahiert.

**11.** Vorrichtung (10) nach einem der Ansprüche 2 bis 10, **dadurch gekennzeichnet, dass** die Vorrichtung Vorgänge des Löschungsmittels (62), des Löschungsmittels für Daten mit niedriger Frequenz (66) und des Aktualisierungsmittels (68) bis zum Ende des Datenstroms wiederholt,
das Zählmittel (64) die Zahl des Intervalls, in dem das Zählergebnis der Auftrittsfrequenz die Anzahl von erlaubten Fehlern übersteigt, in das Speichermittel (14) speichert,
das Löschungsmittel (62) einen Satz der Zahl des Intervalls, welche in dem Speichermittel (14) gespeichert wird, und das Zählergebnis in der Gruppe in dem Speicher (14) beim Aktualisieren der Anzahl von erlaubten Fehlern in der Gruppe, in welcher das Zählergebnis gelöscht wird, mit dem aktualisierten Wert der Anzahl von erlaubten Fehlern speichert.

**12.** Vorrichtung (10) nach einem der Ansprüche 2 bis 11, **dadurch gekennzeichnet, dass** das Aktualisierungsmittel (68) Eins von der Zahl des Intervalls, welche in dem Speichermittel (14) gespeichert ist, durch das Löschungsmittel (62) in jedem Vorgang des Aktualisierungsmittels (68) subtrahiert,
das Löschungsmittel (62) einen Vorgang davon nur durchführt, wenn die Zahl des Intervalls Eins ist.

**13.** Vorrichtung (10) nach einem der Ansprüche 2 bis 12, **dadurch gekennzeichnet, dass** das Löschungsmittel für Daten mit niedriger Frequenz (66) die Summe des Zählergebnisses und der Anzahl von erlaubten Fehlern in den einzelnen Gruppen gewinnt, um das Zählergebnis von der Gruppe zu löschen, in welcher die gewonnene Summe gleich oder niedriger als die Anzahl von Intervallen ist.

**14.** Verfahren zur statistischen Verarbeitung zum Einstellen der Anzahl von erlaubten Fehlern, welche durch den Kehrwert einer erlaubten Fehlerrate dargestellt ist, die für eine vorbestimmte Anzahl von zugeführten Datensätzen als die Anzahl von Intervallen zum Abgrenzen der Daten einzustellen ist, Zählen einer
Auftrittsfrequenz für einen Wert von jedem Datenstück in einem Intervall, Löschen von Frequenzinformation für die Auftrittsfrequenz, die niedriger als eine vorbestimmte Auftrittsfrequenz ist, jedes Mal, wenn die Frequenzinformation basierend auf dem Zählen gewonnen wird, und Gewinnen der Frequenzinformation für die Daten durch ein statisches Verfahren,
**dadurch gekennzeichnet, dass**
das Verfahren umfasst:

einen ersten Schritt des Bestimmens, ob es erforderlich ist, die Auftrittsfrequenz in dem auf das erste Intervall folgende Intervall in dem geteilten Datensatz für jeden Wert der Frequenzinformation, die im Speichermittel (14) gespeichert wird, nach dem Zählen für den Datensatz und nach dem Zählen des Wertes in jedem Intervall zu schätzen; und
einen zweiten Schritt des Speicherns der Auftrittsfrequenz, die durch Subtrahieren der Auftrittsfrequenz in dem ersten Intervall von der gewonnenen Auftrittsfrequenz für den Datensatz in dem Speichermittel (14) berechnet wird, als die Auftrittsfrequenz durch einen Zählvorgang in den Daten der Anzahl, welche der vorbestimmten Anzahl minus Eins entspricht, von den Intervallen, die um ein Intervall verschoben sind, basierend auf der Auftrittsfrequenz in dem ersten Intervall, der Auftrittsfrequenz in dem letzten Intervall in dem geteilten Datensatz und der Auftrittsfrequenz in den Datensätzen, die in dem Speichermittel (14) gespeichert sind, als die Frequenzinformation, wenn eine Bestimmung in dem ersten Schritt wahr ist, und Schätzen der Auftrittsfrequenz in dem nächsten Intervall, um die geschätzte Auftrittsfrequenz in dem Speichermittel (14) als die Auftrittsfrequenz des ersten Intervalls in dem nächsten Datensatz, der um ein Intervall verschoben ist, zu speichern.

**15.** Verfahren nach Anspruch 14, **dadurch gekennzeichnet, dass** der zweite Schritt enthält:

einen vierten Schritt des Gruppierens der Daten, welche den gleichen Wert in dem Datenstrom aufweisen, um das Auftreten der Daten zu zählen;
einen fünften Schritt des Löschens des gesamten oder teilweisen Zählergebnisses in einer Anfangsphase, wenn die Anzahl der Datenströme, welche in einen Speicherbereich des Speichermittels (14) eingegeben sind, die maximale Größe des Speicherbereiches erreicht;
einen sechsten Schritt des Löschens der Gruppe, in welcher die gezählte Auftrittsfrequenz niedriger als die vorbestimmte Auftrittsfrequenz als ein Schwellwert ist; und
einen siebten Schritt des zusätzlichen Empfangens der Anzahl von den Daten in dem Datenstrom, welcher einem der Intervalle entspricht, um das Zählergebnis zu aktualisieren,

wobei der erste Schritt einen Satz des Zählergebnisses und die Anzahl von erlaubten Fehlern in jeder Gruppe in dem Speichermittel (14) speichert,

wobei der zweite Schritt die Anzahl von erlaubten Fehlern in der Gruppe, in welcher das Zählergebnis gelöscht wird, mit dem Zählergebnis der Gruppe vor dem Löschen aktualisiert, wobei die Zählfehler vor und nach dem Löschen innerhalb einer Spanne der Anzahl von erlaubten Fehlern beibehalten wird.

**16.** Verfahren nach Anspruch 14 oder 15, **dadurch gekennzeichnet, dass** es ferner den Vorgang oder die Vorgänge umfasst, wie sie durch das Merkmal oder die Merkmale ausgeführt werden, die zusätzlich in einem der Ansprüche 3 bis 13 definiert sind.

## Revendications

**1.** Appareil de traitement statistique (10) pour définir le nombre d'erreurs admissibles représenté par la réciproque d'un taux d'erreur admissible devant être défini pour un nombre, prédéterminé d'ensembles de données fournis en tant que nombre d'intervalles pour délimiter les données, compter une fréquence d'occurrence pour une valeur de chaque donnée dans un intervalle, supprimer les informations de fréquence pour la fréquence d'occurrence inférieure à une fréquence d'occurrence prédéterminée chaque fois que des informations de fréquence basées sur le comptage sont acquises, et acquérir les informations de fréquence pour les données par le biais d'un procédé statistique, **caractérisé en ce que**
ledit analyseur (10) comprend :

des moyens de stockage (14) pour stocker les fréquences d'occurrence dans des intervalles entiers parmi l'ensemble des intervalles, et le premier et le dernier des intervalles entiers en tant qu'ensemble de fréquences d'occurrence, et

des moyens de traitement arithmétiques (12) pour compter la fréquence d'occurrence de la valeur tout en supprimant les informations de fréquence concordant avec une comparaison des informations de fréquence stockées ;

lesdits moyens de traitement arithmétiques (12) déterminant s'il faut estimer la fréquence d'occurrence de la valeur dans l'intervalle suivant le premier intervalle pour la valeur des informations de fréquence stockées dans lesdits moyens de stockage (14) suite au comptage du nombre prédéterminé d'ensembles de données ou suite au comptage de la valeur de l'ensemble de données dans chaque intervalle ;

lesdits moyens de traitement arithmétiques (12) étant destinés, en réponse à la détermination vraie, à stocker dans lesdits moyens de stockage (14) une valeur calculée en soustrayant la fréquence d'occurrence dans le premier intervalle de la fréquence d'occurrence estimée en tant que fréquence d'occurrence dans les ensembles de données d'un nombre, correspondant au nombre prédéterminé moins un, des intervalles décalés d'un intervalle,

lesdits moyens de traitement arithmétiques (12) estimant la fréquence d'occurrence dans l'intervalle suivant le premier intervalle sur la base de l'ensemble des fréquences d'occurrence pour stocker la fréquence d'occurrence estimée dans lesdits moyens de stockage (14) en tant que fréquence d'occurrence du premier intervalle dans le nombre prédéterminé des ensembles de données suivants décalés d'un intervalle.

**2.** Appareil (10) selon la revendication 1, **caractérisé en outre en ce que** lesdits moyens de stockage (14) stockent les fréquences d'occurrence dans le premier et le dernier des intervalles délimités pour les ensembles de données, la fréquence d'occurrence pour compter l'occurrence de chaque valeur des données, et une valeur d'estimation d'erreur représentant un intervalle de début de comptage de la fréquence d'occurrence pour compter l'occurrence de chaque valeur des données en tant qu'ensemble d'informations de fréquence lié au comptage ;

lesdits moyens de traitement arithmétiques (12) recherchent lesdits moyens de stockage (14) stockant les informations de fréquence de la valeur dans les données ayant un taux d'occurrence supérieur ou égal à un taux d'occurrence prédéterminé dans la période de cycle, traiter les informations de fréquence dans lesdits moyens de stockage (14) par addition, suppression et modification, régler, après traitement du premier ensemble de données, l'ensemble de données décalé d'un intervalle comme cycle suivant chaque fois que l'on traite les données pour un intervalle, et effectuer l'ajout, la suppression et la modification pour les informations de fréquence de la valeur afin de rechercher et acquérir les informations de fréquence de la valeur dans les données ayant un taux d'occurrence supérieur ou égal au taux d'occurrence prédéterminé pour l'ensemble de données du cycle suivant ;

lesdits moyens de traitement arithmétiques (12) comprenant des moyens de traitement d'acquisition pour acquérir la valeur des données incluses dans le flux de données ;

des moyens de traitement de comptage (20) pour ajouter à nouveau les informations de fréquence pour la valeur acquise en réponse à l'absence de la valeur pour les données fournies, et ajouter la fréquence d'occurrence des informations de fréquence pour la valeur acquise en réponse à la présence de la valeur pour mettre à jour la fréquence d'occurrence ;

des moyens de détermination de nombre de traitements dans l'intervalle (22) pour compter le nombre de traitements pour les données à partir des premières données dans chaque intervalle pour stocker le comptage dans lesdits moyens de stockage (14), et pour déterminer s'il faut atteindre une limite d'intervalle sur la base du nombre stocké des données traitées dans l'intervalle ;

des moyens de détermination du nombre de traitements (24) pour compter le nombre de traitements pour les données à partir du début des traitements pour déterminer si le nombre d'ensembles de données inférieur au nombre prédéterminé a été traité ou non sur la base du nombre de données traitées stockées dans lesdits moyens de stockage (14) ;

des moyens de traitement de détermination de comptage (26) pour supprimer les informations de fréquence dont la fréquence d'occurrence est inférieure à la fréquence d'occurrence prédéterminée dans les données pour le nombre d'intervalles traités sur la base de la fréquence d'occurrence de la valeur et la valeur d'estimation d'erreur dans l'ensemble de données après traitement des données acquises dans un intervalle ; et

des moyens de traitement arithmétiques de fréquence (28) pour ajuster la fréquence d'occurrence grâce auxdits moyens de traitement de comptage (20) sur la base de la valeur d'estimation d'erreur de chaque valeur pour l'ensemble de données dans le premier cycle stocké dans lesdits moyens de stockage (14), associés à la fin de traitement desdits moyens de traitement de comptage (20) et desdits moyens de traitement de détermination de comptage (26), déterminer s'il faut estimer la fréquence d'occurrence de la valeur dans l'intervalle suivant le premier intervalle, stocker, en réponse à la détermination vraie, une valeur calculée en soustrayant la fréquence d'occurrence dans le premier intervalle de la fréquence d'occurrence estimée dans lesdits moyens de stockage (14) en tant que fréquence d'occurrence dans les ensembles de données pour le nombre, correspondant au nombre prédéterminé moins un, d'intervalles décalés d'un intervalle et estimer la fréquence d'occurrence dans l'intervalle suivant le premier intervalle sur la base d'un ensemble des fréquences d'occurrence pour stocker la fréquence d'occurrence estimée dans lesdits moyens de stockage (14) en tant que fréquence d'occurrence du premier intervalle dans les ensembles de données suivants pour le nombre prédéterminé d'intervalles décalés d'un intervalle ;

lesdits moyens de traitement arithmétiques (12) traitant consécutivement les données entrées traitées en tant que données entrées à partir des premières données du dernier intervalle du cycle suivant.

3. Appareil (10) selon la revendication 2, **caractérisé en ce que** lesdits moyens de traitement arithmétique de fréquence (28) décrémentent la valeur d'estimation d'erreur de un en réponse à la fausse détermination pour l'estimation de la fréquence d'occurrence dans l'intervalle suivant.

4. Appareil (10) selon la revendication 2 ou 3, **caractérisé en ce que** lesdits moyens de traitement arithmétique (12) relient les fréquences d'occurrence des premier et dernier intervalles pour estimer la fréquence d'occurrence dans l'intervalle suivant sur la base de l'expression d'une courbe quadratique représentant la zone formée par les fréquences d'occurrence des premier et dernier intervalles.

5. Appareil (10) selon l'une des revendications 2 à 4, **caractérisé en ce que** lesdits moyens de traitement arithmétique (12) estiment le taux de changement de la fréquence d'occurrence de chaque valeur sur la base des fréquences d'occurrence dans les premier, dernier intervalles et intervalles entiers.

6. Appareil (10) selon l'une des revendications 2 à 5, **caractérisé en ce que** lesdits moyens de traitement arithmétiques (12) relient les fréquences d'occurrence dans les premier et dernier intervalles pour estimer une valeur différentielle dans le dernier intervalle calculée grâce à une expression acquise en différenciant une courbe quadratique représentant la zone formée par les fréquences d'occurrence des premier et dernier intervalles en tant que taux de changement de la fréquence d'occurrence.

7. Appareil (10) selon l'une des revendications 2 à 6, **caractérisé en ce que** lesdits moyens de traitement arithmétique (12) comprennent en outre des moyens de traitement d'extraction pour rechercher dans lesdits moyens de stockage (14) les informations de fréquence dont le taux d'occurrence est supérieur ou égal au taux d'occurrence prédéterminé pour extraire les informations de fréquence après comptage du nombre prédéterminé des ensembles de données et après comptage de la valeur de l'ensemble de données dans chaque intervalle.

8. Appareil (10) selon l'une des revendications 2 à 7,
**caractérisé en ce que**

lesdits moyens de traitement d'acquisition (18) comprennent :

des moyens d'acquisition de données (60) pour acquérir la valeur des données incluses dans le flux de données ; et

des moyens de suppression (62) pour supprimer la totalité ou une partie du résultat de comptage dans une étape initiale en réponse à l'atteinte du nombre de flux de données entrées dans une zone de stockage de ladite mémoire (14) à la taille maximale de ladite zone de stockage, lesdits moyens de traitement de comptage (20) comprenant :

des moyens de comptage (64) pour grouper la même valeur dans le flux de données pour compter la fréquence d'occurrence de la valeur dans chaque groupe alors que le flux de données entre dans ladite zone de stockage ; des moyens de suppression de données de basse fréquence (66) pour supprimer les informations de fréquence dont la fréquence d'occurrence est inférieure à la fréquence d'occurrence prédéterminée des groupes individuels ; et des moyens de mise à jour (68) pour recevoir en outre le nombre des flux de données correspondant à l'un des intervalles pour mettre à jour le résultat de comptage, lesdits moyens de suppression (62) mettant à jour une erreur de comptage admissible dans le groupe où le résultat de comptage est supprimé avec le résultat de comptage du groupe avant la suppression, conservant ainsi les erreurs de comptage avant et après la suppression dans une plage de l'erreur de comptage admissible, lesdits moyens de comptage (64) stockant un ensemble du résultat de comptage et le nombre d'erreurs admissibles du groupe dans ladite mémoire (14).

9.  Appareil (10) selon l'une des revendications 2 à 8, **caractérisé en ce que** lesdits moyens de comptage (64) stockent le résultat de comptage jusqu'à l'intervalle précédent d'un intervalle l'intervalle où la fréquence d'occurrence dépasse le nombre d'erreurs admissibles en tant que valeur mise à jour du nombre d'erreurs admissibles de chaque groupe dans lesdits moyens de stockage (14), lesdits moyens de suppression (62) mettant à jour le nombre d'erreurs admissibles dans le groupe où le résultat de comptage est supprimé avec la valeur mise à jour du nombre d'erreurs admissibles.

10. Appareil (10) selon l'une des revendications 2 à 9, **caractérisé en ce que** lesdits moyens de suppression (62), dans le groupe où le résultat de comptage est supprimé, soustraient la valeur du nombre d'erreurs admissibles mise à jour du résultat de comptage de la fréquence d'occurrence dans la mise à jour du nombre d'erreurs admissibles avec la valeur mise à jour.

11. Appareil (10) selon l'une des revendications 2 à 10, **caractérisé en ce que** ledit appareil répète les procédés desdits moyens de suppression (62), desdits moyens de suppression des données basse fréquence (66) et desdits moyens de mise à jour (68) jusqu'à la fin du flux de données, lesdits moyens de comptage (64) stockant le nombre de l'intervalle où le résultat de comptage de la fréquence d'occurrence dépasse le nombre d'erreurs admissibles dans lesdits moyens de stockage (14), lesdits moyens de suppression (62) stockant un ensemble du nombre de l'intervalle stocké dans lesdits moyens de stockage (14) et le résultat de comptage du groupe dans ladite mémoire (14), dans la mise à jour du nombre d'erreurs admissibles, dans le groupe où le résultat de comptage est supprimé, avec la valeur mise à jour du nombre d'erreurs admissibles.

12. Appareil (10) selon l'une des revendications 2 à 11, **caractérisé en ce que** lesdits moyens de mise à jour (68) soustraient un du nombre de l'intervalle stocké dans lesdits moyens de stockage (14) grâce auxdits moyens de suppression (62) dans chaque procédé desdits moyens de mise à jour (68), lesdits moyens de suppression (62) n'exécutant un procédé de ceux-ci que lorsque le nombre de l'intervalle est un.

13. Appareil (10) selon l'une des revendications 2 à 12, **caractérisé en ce que** lesdits moyens de suppression des données de basse fréquence (66) acquièrent la somme du résultat de comptage et le nombre d'erreurs admissibles dans les groupes individuels pour supprimer le résultat de comptage du groupe où la somme acquise est inférieure ou égale au nombre des intervalles.

14. Procédé de traitement statistique pour définir le nombre d'erreurs admissibles représenté par la réciproque d'un taux d'erreur admissible devant être défini pour un nombre prédéterminé d'ensembles de données fournis en tant que nombre d'intervalles pour délimiter les données, compter une fréquence d'occurrence pour une valeur de chaque donnée dans un intervalle, supprimer les informations de fréquence pour la fréquence d'occurrence inférieure à une fréquence d'occurrence prédéterminée en acquérant à chaque fois les informations de fréquence basées sur le comptage et acquérir les informations de fréquence pour les données par le biais d'un procédé statistique, **caractérisé en ce que**
ledit procédé comprend :

une première étape pour déterminer s'il est nécessaire d'estimer la fréquence d'occurrence dans l'intervalle suivant le premier intervalle dans l'ensemble de données divisé pour chaque valeur des informations de stockage stockées dans les moyens de stockage (14) après le comptage pour l'ensemble de données et après comptage de la valeur dans chaque intervalle ; et

une deuxième étape pour stocker la fréquence d'occurrence calculée en soustrayant la fréquence d'occurrence dans le premier intervalle de la fréquence d'occurrence acquise pour l'ensemble de données dans les moyens de stockage (14) en tant que fréquence d'occurrence grâce à un procédé de comptage dans les données du nombre, correspondant au nombre prédéterminé moins un, des intervalles décalés d'un intervalle sur la base de la fréquence d'occurrence dans le premier intervalle, la fréquence d'occurrence dans le dernier intervalle de l'ensemble de données divisé, et la fréquence d'occurrence dans les ensembles de données stockés dans les moyens de stockage (14) en tant qu'informations de fréquence où une détermination dans la première étape est vraie et en estimant la fréquence d'occurrence dans l'intervalle suivant pour stocker la fréquence d'occurrence estimée dans les moyens de stockage (14) en tant que fréquence d'occurrence du premier intervalle dans l'ensemble de données suivant décalé d'un intervalle.

**15.** Procédé selon la revendication 14, **caractérisé en ce que** ladite deuxième étape comprend :

une quatrième étape consistant à grouper les données ayant la même valeur dans le flux de données pour compter l'occurrence des données ;

une cinquième étape consistant à supprimer le résultat de comptage entier ou partiel dans une étape initiale où le nombre de flux de données entrées dans une zone de stockage des moyens de stockage (14) atteint la taille maximale de la zone de stockage ;

une sixième étape consistant à supprimer le groupe où la fréquence d'occurrence comptée est inférieure à la fréquence d'occurrence prédéterminée en tant que valeur de seuil ; et

une septième étape consistant à recevoir en outre le nombre de données dans le flux de données correspondant à l'un des intervalles pour mettre à jour le résultat de comptage,

ladite première étape stockant un ensemble du résultat de comptage et le nombre d'erreurs admissibles dans chaque groupe des moyens de stockage (14),

ladite deuxième étape mettant à jour le nombre d'erreurs admissibles dans le groupe où le résultat de comptage est supprimé avec le résultat de comptage du groupe avant la suppression, conservant ainsi les erreurs de comptage avant et après la suppression dans une plage du nombre d'erreurs admissibles.

**16.** Procédé selon la revendication 14 ou 15, **caractérisé en ce qu'**il comprend en outre l'opération ou les opérations telles que mise(s) en oeuvre par la caractéristique ou les caractéristiques définie(s) en outre dans l'une des revendications 3 à 13.

## FIG. 1

ARITHMETIC PROCESSOR (12)

- ACQUISITION PROCESSOR — 18
- COUNTING PROCESSOR — 20
- INTRA-INTERVAL PROCESS NUMBER DETERMINER — 22
- PROCESS NUMBER DETERMINER — 24
- COUNT DETERMINATION PROCESSOR — 26
- FREQUENCY ARITHMETIC PROCESSOR — 28
- EXTRACTION PROCESSOR — 30

STORAGE (14)

- SKETCH MEMORY — 36
- INTRA-INTERVAL PROCESS NUMBER MEMORY — 38
- PROCESS NUMBER MEMORY — 40

INTERFACE CKT — 16

10

34

32

56

EP 2 081 326 B1

## FIG. 2A

| VALUE | FIRST INTERVAL FREQUENCY $y_t$ | FREQUENCY COUNT f | ERROR ESTIMATING VALUE $\Delta$ | FINAL INTERVAL FREQUENCY $y_n$ |
|---|---|---|---|---|
| D1 | – | 0 | 0 | 5 |
| | | | | |
| | | | | |

(42, 44, 46, 48, 50)

⋮

## FIG. 2B

| VALUE | FIRST INTERVAL FREQUENCY $y_t$ | FREQUENCY COUNT f | ERROR ESTIMATING VALUE $\Delta$ | FINAL INTERVAL FREQUENCY $y_n$ |
|---|---|---|---|---|
| D1 | 5 | 5 | 0 | 5 |
| D2 | 1 | 1 | 0 | 1 |
| | | | | |

(42, 44, 46, 48, 50)

⋮

## FIG. 2C

| VALUE | FIRST INTERVAL FREQUENCY $y_t$ | FREQUENCY COUNT f | ERROR ESTIMATING VALUE $\Delta$ | FINAL INTERVAL FREQUENCY $y_n$ |
|---|---|---|---|---|
| D1 | 5 | 1500 | 0 | 50 |
| D2 | 15 | 720 | 10 | 2 |
| | | | | |

(42, 44, 46, 48, 50)

⋮

## FIG. 2D

| VALUE | FIRST INTERVAL FREQUENCY $y_t$ | FREQUENCY COUNT f | ERROR ESTIMATING VALUE $\Delta$ | FINAL INTERVAL FREQUENCY $y_n$ |
|---|---|---|---|---|
| D1 | 4 | 1495 | 0 | 0 |
| D2 | 15 | 720 | 9 | 0 |
| | | | | |

(42, 44, 46, 48, 50)

⋮

FIG. 3

## FIG. 4

```
                    ( START )
                        │
  ┌(D)──────────────────┤
  │                     ▼
  │            ┌─────────────────┐
  │            │  ACQUIRE DATA   │──── S10
  │            └─────────────────┘
  │                     │
  │                     ▼                              S14
  │              ╱ DATA STORED ╲ ─── S12      NO         │
  │             <      ?        > ─────────────┐   ┌──────────────────┐
  │              ╲            ╱                 │   │ ADD FREQUENCY    │
  │                    │                        └──▶│  INFORMATION     │
  │                   YES                           └──────────────────┘
  │                    ▼                                     │
  │            ┌─────────────────┐                           │
  │            │ ADD FREQUENCY   │──── S16                    │
  │            │  OF INTERVAL    │                            │
  │            └─────────────────┘                           │
  │                    │◀─────────────────────────────────────┘
  │                    ▼
  │            ┌──────────────────────┐
  │            │   ADD NUMBER OF       │──── S18
  │            │ DATA INTRA-INTERVAL   │
  │            └──────────────────────┘
  │                    │
  │                    ▼                    S20
  │   NO         ╱    BOUNDARY    ╲
  └─────────────<   OF INTERVAL    >
                 ╲       ?        ╱
                        │
                       YES
                        ▼
                ┌─────────────────┐
                │ SET RESULTANT   │──── S22
                │ COUNT TO ZERO   │
                └─────────────────┘
                        │
                        ▼
                ┌─────────────────┐
                │ ADD FREQUENCY   │──── S24
                │  INFORMATION    │
                └─────────────────┘
                        │
                        ▼
                ┌──────────────────────┐
                │ DELETE FREQUENCY      │──── S26
                │ INFORMATION BASED     │
                │   ON CONDITION        │
                └──────────────────────┘
                        │
                        ▼
                       (A)
```

*FIG. 5*

## FIG. 6

```
                    ┌──────────┐
                    │   SUB    │
                    └────┬─────┘
                         │
┌────────────────────────┤
│                        ▼
│              ┌───────────────────┐
│              │     ACQUIRE       │
│              │    FREQUENCY      │───── SS10
│              │   INFORMATION     │
│              └─────────┬─────────┘
│                        │
│                        ▼         SS12
│                    ◇─────────◇        NO
│                   ◇  Δ = 0   ◇──────────────────────┐   SS14
│                    ◇    ?   ◇                        │
│                     ◇─────◇                          ▼
│                        │ YES                ┌──────────────────┐
│                        ▼                    │   PERFORM Δ      │
│              ┌───────────────────┐          │   SUBTRACTION    │
│              │     PERFORM       │          │    PROCESS       │
│              │   APPROXIMATE     │── SS16   └─────────┬────────┘
│              │  PROCESS FOR      │                    │
│              │   FREQUENCY       │                    │
│              └─────────┬─────────┘                    │
│                        │◄───────────────────────────┘
│                        ▼              SS18
│         NO      ◇───────────────────◇
└────────────────◇   END PROCESS      ◇
                  ◇ FOR ALL FREQUENCY ◇
                   ◇  INFORMATION     ◇
                    ◇       ?        ◇
                     ◇──────────────◇
                        │ YES
                        ▼
                  ┌──────────┐
                  │  RETURN  │
                  └──────────┘
```

FIG. 7

EP 2 081 326 B1

# FIG. 8

12

ARITHMETIC PROCESSOR

| ACQUISITION PROCESSOR | 18 |

| COUNTING PROCESSOR | 20 |

| INTRA–INTERVAL PROCESS NUMBER DETERMINER | 22 |

| PROCESS NUMBER DETERMINER | 24 |

| COUNT DETERMINATION PROCESSOR | 26 |

| FREQUENCY ARITHMETIC PROCESSOR | 28 |

| EXTRACTION PROCESSOR | 30 |

| PREDICTIVE OUTPUT PROCESSOR | 58 |

*FIG. 9*

ESTIMATE RATE
OF CHANGE — S36

*FIG. 10*

DATA
ACQUISITION
FUNC BLK — 60

DELETE
FUNC BLK — 62

18

34

# FIG. 11

## FIG. 12

PROCESS BY COUNTING FUNC BLK

PROCESS BY UPDATE FUNC BLK

INTERVAL NUMBER

| 1 | 2 | 3 | $\cdots$ | | $\varepsilon N+1$ | $\cdots$ |

$1/\varepsilon$   $1/\varepsilon$   $1/\varepsilon$        $1/\varepsilon$   $1/\varepsilon$

TIME

EP 2 081 326 B1

## FIG. 13

| VALUE | FREQUENCY COUNT (f) | COUNT-START POSITION |
|-------|---------------------|----------------------|
| D1 | 410 | 1 |
| D2 | 320 | 11 |

# FIG. 14

EXCEEDING εN=50    EXCEEDING εN=50

INTERVAL NUMBER  1  2  3  4  5  6  . . .  17  18  . . .

NUMBER OF D1        43      8      32        23

1  2  3  4  5  . . .  16  17  . . .

1  2  3  4  . . .  15  16  . . .

1  . . .  12  13  . . .

1  . . .  11  12  . . .

32        23

TIME

EP 2 081 326 B1

EP 2 081 326 B1

*FIG. 15A*

70

| VALUE | FREQUENCY COUNT (f) | COUNT-START POSITION | ALLOWABLE ERROR |
|-------|---------------------|----------------------|-----------------|
| 72 | 74 | 76 | 78 |
| D1 | 410 | 1 | 0 |
| D2 | 320 | 11 | 10 |

*FIG. 15B*

80

| VALUE | INTERVAL DISTANCE TO NEXT UPDATE | UPDATED ALLOWABLE ERROR VALUE | INITIAL INTERVALS FREQUENCY VALUE | SEQUENCE NUMBER FOR VALUE |
|-------|----------------------------------|-------------------------------|-----------------------------------|---------------------------|
| 72 | 82 | 84 | 86 | 88 |
| D1 | 6 | 43 | 0 | 1 |
| D1 | 12 | 32 | 8 | 2 |
| D1 | 3 | 23 | 23 | 3 |
| D2 | 1 | 39 | 0 | 1 |
| D2 | 10 | 30 | 11 | 2 |

EP 2 081 326 B1

TIME

COUNT BY COUNTING
FUNC BLK 64

*FIG. 16A*

INTERVAL
NUMBER

1    • • •    6    • • •    $\varepsilon N$

NUMBER
OF D1

43        8        90

COUNT BY COUNTING
FUNC BLK 64

PROCESS BY UPDATE
FUNC BLK 68

*FIG. 16B*

INTERVAL
NUMBER

1    • • •    6    • • •    $\varepsilon N$    $\varepsilon N+1$

NUMBER
OF D1

43        8        90

92

FIG. 16C

COUNT BY COUNTING
FUNC BLK 64

PROCESS BY UPDATE
FUNC BLK 62

TIME

INTERVAL
NUMBER

6 ・・・ $\varepsilon$N $\varepsilon$N+1

NUMBER
OF D1

8 90

FIG. 16D

COUNT BY COUNTING
FUNC BLK 64

PROCESS BY UPDATE
FUNC BLK 62

INTERVAL
NUMBER

6 17 18 ・・・ $\varepsilon$N $\varepsilon$N+1

NUMBER
OF D1

8 32 23 90

92

**FIG. 17A** — 70

| VALUE (72) | FREQUENCY COUNT (f) (74) | COUNT-START POSITION (76) | ALLOWABLE ERROR (78) |
|---|---|---|---|
| D1 | 410 | 1 | 0 |
| D2 | 320 | 11 | 10 |

**FIG. 17B** — 80

| VALUE (72) | INTERVAL DISTANCE TO NEXT UPDATE (82) | UPDATED ALLOWABLE ERROR VALUE (84) | EARLY INTERVALS FREQUENCY VALUE (86) | SEQUENCE NUMBER FOR VALUE (88) |
|---|---|---|---|---|
| D1 | 6 | 43 | 0 | 1 |
| D1 | 12 | 32 | 8 | 2 |
| D1 | 3 | 23 | 23 | 3 |
| D2 | 1 | 39 | 0 | 1 |
| D2 | 10 | 30 | 11 | 2 |

*FIG. 17C*

| VALUE | FREQUENCY COUNT (f) | COUNT-START POSITION | ALLOWABLE ERROR |
|---|---|---|---|
| D1 | 367 | 6 | 43 |
| D2 | 320 | 11 | 10 |

*FIG. 17D*

| VALUE | INTERVAL DISTANCE TO NEXT UPDATE | UPDATED ALLOWABLE ERROR VALUE | SEQUENCE NUMBER FOR VALUE |
|---|---|---|---|
| D1 | 12 | 32 | 1 |
| D1 | 3 | 23 | 2 |
| D2 | 1 | 39 | 1 |
| D2 | 10 | 30 | 2 |

# FIG. 18

PACKET-COLLECTOR

INPUT INTERFACE CKT

32

16

94

56

# FIG. 19

32

PACKET-COLLECTOR  94

COUNTING FUNC BLK  64

UPDATE FUNC BLK  68

PACKET-COLECTOR  96

20

34

32

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2005060598 A1
- US 2005227625 A1
- JP 2008007359 A
- JP 2008053195 A

### Non-patent literature cited in the description

- **Gurmeet Singh Manku et al.** Approximate Frequency Counts over Data Stream. *Proceedings of the 28th VLDB Conference,* August 2002, 346-357